# EUROPÄISCHE PATENTSCHRIFT

(11) **EP 2 883 722 B1**
(45) Veröffentlichungstag und Bekanntmachung des Hinweises auf die Patenterteilung: **15.11.2017**
(21) Anmeldenummer: 13196893.5
(22) Anmeldetag: 12.12.2013
(51) Int. Cl.: A01D 75/28, B60G 5/01, B60G 21/00, B60G 21/067, B60G 17/005, B60G 1/02

(54) **Selbstfahrende Erntemaschine mit hydraulischer Achskopplung zur Wankstabilisierung**
Self-propelled harvester with hydraulic axle coupling for roll stabilisation
Moissonneuse automotrice dotée d'un couplage d'essieu hydraulique anti-roulis

(43) Veröffentlichungstag der Anmeldung: 17.06.2015
(73) Patentinhaber: Paintner, Hermann, 84097 Herrngiersdorf (DE)
(72) Erfinder: Paintner, Hermann, 84097 Herrngiersdorf (DE)
(74) Vertreter: Becker Kurig Straus

(56) Entgegenhaltungen:
- DE-A1- 2 038 744
- DE-A1- 2 056 634
- DE-A1- 2 556 532
- DE-A1- 19 645 668
- DE-A1-102006 048 662
- DE-B- 1 290 828
- DE-U1-202007 012 567
- US-A- 1 835 112
- US-A- 3 295 623
- US-A- 4 056 158

## Beschreibung

### Stand der Technik

Die Erfindung betrifft eine selbstfahrende Erntemaschine, insbesondere eine Rüben- oder Kartoffelerntemaschine, wie sie typischerweise zum Ernten von unter der Erde befindlichen Feldfrüchten eingesetzt wird.

Selbstfahrende landwirtschaftliche Erntemaschinen bewegen sich auf einem unebenen Gelände variabler Festigkeit, z.B. Ackerboden. Dabei müssen auch schwere und ungleiche gelagerte Lasten, z.B. Erntegut bewegt werden, ohne den Boden und die Anbaufläche zu beschädigen. Aus diesem Grund wurden Fahrgestelle oder Systeme erfunden, die die Last über die Achsen, bzw. Räder verteilt.

Wie im DLZ Agrarmagazin vom März 2013 auf Seite 100 gezeigt, wurde beispielsweise "das Gerät Terra Dos T4-40 von der Firma Holmer drei-achsig konzipiert, um die Last eines großen Bunkers bodenschonend tragen zu können. Die hintere Achse verfügt über ein Schubrohr; so kann die Achse federn und pendeln. Die Radlast lässt sich durch die hydraulische Federung in Abhängigkeit vom Bunkerfüllstand gleichmäßig auf beide Hinterachsen verteilen. Bei Seitenhang drückt die Hinterachse für ein stabiles Fahrverhalten gegen den Hang."

Wie aus dem Bild des Fahrgestells auf der gleichen Seite ersichtlich ist, sind die Vorder- und die 3. Achse (genannte hintere Achse mit Schubrohr - wobei ein Schubrohr ein Längslenker ist) mittels hydraulischen Zylindern im Rollwinkel beeinflussbar, nicht jedoch die 2. Achse, die insofern starr ist, dass sich keine vertikale Translationsbeweglichkeit aufweist, d.h. deren Achse, bzw. Radaufhängungen in der Höhe gegenüber dem Chassis nicht verstellbar sind.

Das führt dazu, dass beim Überfahren einer Bodenwelle mit der 2. Achse, das Chassis den vollen Hub mitmacht und auch eine höhere Last auf dieser Achse liegt, im Vergleich dazu, wenn keine Bodenwelle vorhanden ist.

Weiterhin drückt sich die 2. Achse bei Fahrt am Seitenhang verstärkt in den Hang hinein, wenn die anderen Achsen einer Wankregulierung nachgeben.

Die DE102006048662 lehrt ein Fahrzeug, bei dem zwei Stützzylinder das Chassis auf die Achse stützen, wobei diese Zylinder kreuzweise hydraulisch verschaltet sind. Beim Überfahren einer Bodenunebenheit wird der Zylinder bewegt. Die damit verbundene Ausgleichsbewegungen des anderen Zylinders bei Bewegung des Zylinders, arbeitet einem Wanken des Chassis gegenüber den Achsen entgegen, so dass Wankbewegungen am Fahrzeug unterdrückt werden.

Aus der US 3295623 ist bereits ein Transportfahrzeug bekannt, bei dem mehrere Achsen durch ein Hydrauliknetzwerk verbunden sind. Aus der DE 1290828 B ist ein geländegängiges Fahrzeug bekannt. Aus der DE 202007012567 U1 ist ein Trägerfahrzeug für landwirtschaftliche Zwecke bekannt. Aus der US 4056158 A ist ein mit Hydraulikzylindern ausgerüstetes Geländefahrzeug bekannt. Aus der US 1835112 ist ebenfalls ein gattungsbildendes Fahrzeug bekannt.

### Offenbarung der Erfindung

Eine Lösung hierzu wird erfindungsgemäß durch die Lehre des Anspruch 1 und ein Verfahren nach Anspruch 13 vorgeschlagen. Weitere vorteilhafte Ausgestaltungen und Weiterbildungen gehen aus den Unteransprüchen hervor.

Gemäß einem Aspekt wird eine selbstfahrende Erntemaschine vorgeschlagen, mit einer linken und rechten Seite des Fahrzeugs, mit einem Chassis bzw. Karosserie, mit mindestens drei Achsen, welche geeignet sind für die Aufnahme von Rädern bzw. dergleichen Rollvorrichtungen, wobei diese mindestens drei Achsen oder deren Achsaufhängung über Hebevorrichtungen am Chassis abgestützt oder aufgehängt sind und wenigstens eine Hebevorrichtung jeder Achse mit wenigstens einer Hebevorrichtung jeder anderen der mindestens drei Achsen in Verbindung steht, derart, dass die Verbindung geeignet ist, die Last, die auf die Räder einer Seite des Fahrzeugs wirkt, auf alle Räder derselben Fahrzeugseite zu verteilen.

Eine selbst fahrende Erntemaschine ist ein Fahrzeug mit eigenem Antrieb, das zum Ernten landwirtschaftlicher Produkte dient.
Insbesondere bei Rübenrodern oder Kartoffelerntemaschinen ist die Erfindung gut einsetzbar. Die vorgeschlagene Erntemaschine kann insbesondere bei Verwendung von Vorsätzen, wie Rodeaggregaten, genutzt werden, da die verringerte Wartkbewegung des Fahrzeugs einen gleichmäßigere Führung des Vorsatzes über den Ackerboden ermöglicht.
Das Fahrzeug kann hierbei das Ernteaggregat (z.B. einen Vorsatz) mit umfassen, indem dieses z.B. fest in oder an dem Fahrzeug installiert ist. Oft wird es aber abnehmbar oder kuppelbar sein. Gleiches gilt, wenn Ernteaggregate gezogen werden und sich hinter dem Fahrzeug befinden oder fest installiert sind.
Das Chassis, Rahmen oder auch Fahrgestell genannt, ist ein Teil des Fahrzeugs, dass zur Befestigung von Achsen und Rädern dient. Falls ein Fahrzeug eine selbst tragende Karosserie hat, kann auch diese die Funktion des Chassis übernehmen. Im Folgenden ist von einem Chassis die Rede, was aber nicht einschränkend sein soll.
Eine Achse dient zum Befestigen drehbarer Maschinenelemente, hier beim Fahrzeug üblicherweise die Räder, normalerweise paarweise pro Achse zwei Räder, rechts und links; oft seitenweise fluchtend angeordnet. Es sind auch Konstruktionen umfasst, in denen keine ganzen Achsen vorkommen, sondern auch Halbachsen, oder Einzelradaufhängungen. Ebenso sind Konstruktionen, die achsgleiche Freiheitsgrade bieten oder einschränken, davon umfasst. Anstelle von Rädern können auch andere Rollvorrichtungen auf den Achsen angebracht werden, die die Last von der Achse auf den Boden übertragen. Dazu gehören insbesondere andere Fahrvorrichtungen, z.b Raupenlaufwerk/Raupenfahrwerk oder Antriebsräder für Gleisketten. Ein Raupenlaufwerk würde die Last über eine größere Auflagefläche auf den Boden übertragen, also einen geringeren Druck ausüben. Es können möglicherweise Räder anstelle von Raupenlaufwerken verwendet werden, da dynamische Lastspitzen ausgeglichen werden. Räder sind jedoch günstiger und wartungsarm.
Es existiert eine Achsabstützung, bzw. -aufhängung, wobei die Achsen oder Achsträger mittels Hebevorrichtungen am Chassis aufgehängt oder abgestützt sind und über diese Abstützung Teile des Fahrzeuggewichts getragen werden kann. Diese Hebevorrichtungen können den Abstand ihrer Aufhängepunkte (dort wo sie mit dem Chassis oder der Achse verbunden sind) verändern, i.d.R. durch eine Hubänderung. Dies erfolgt durch Zylinder die hydraulisch betrieben sind. Ggf. stützt die Hebevorrichtung nicht direkt die Achse, sondern deren Achsaufhängung, oder je nach Konstruktion sogar einen Teil des Fahrgestells, In diesem Fall haben die Hebevorrichtungen eine wenigstens indirekte Kraftwirkung auf die an dieses Teil des Chassis montierten Achsen.
Zwischen mindestens einer Hebevorrichtung jeder Achse mit mindestens einer Hebevorrichtung jeder anderen Achse besteht eine Verbindung, die es ermöglicht, die Last, die durch das Gewicht des Fahrzeugs entsteht und über das Fahrgestell, über die Hebevorrichtung auf die Achsen und schlussendlich seitenweise auf die Räder wirkt, zu verteilen.

Diese Verbindung ist geeigneter Hardware ausgebildet hier hydraulischen Leitungen für eine hydraulische Verbindung. Über diese Verbindungen wird die Information zu einer Änderung der Geometrie oder Vorspannung der Hebevorrichtungen übermittelt. Z.B. durch Druckänderung innerhalb von hydraulischen oder pneumatischen Leitungen, oder elektrischen Signalen bei elektrischen Systemen.
Die verbundenen Komponenten bilden ein Netzwerk. Ein Netzwerk ist abgeschlossen, d.h. eine Informationsübertragung mittels des Mediums des Netzwerks findet nur innerhalb dieses statt.
Die Last bezeichnet die Gesamtlast des Fahrzeugs oder die Achslast die auf die jeweilige Achse, bzw. dadurch auf den Rädern lastet. Sie bewirkt über die Räder den Druck auf den Boden und dieser ist idealerweise zu minimieren um den Ackerboden zu schonen. Dabei ist es wichtig, den Spitzendruck der über ein einzelnes Rad wirken kann zu minimieren und nicht unbedingt der über alle Räder gemittelte Gesamtdruck, der durch das Fahrzeuggewicht (mit Beladung) bestimmt ist. Letzteres zu minimieren ist ohnehin physikalisch nicht möglich.

Entsprechend physikalischer Gesetzmäßigkeiten verteilt sich die Gewichtslast auch auf die linken und rechten Räder. Im Falle einer Fahrzeugneigung, z.B. bei Fahren am Seitenhang, Kurvenfahrt oder ungleicher Beladung ist die Last auf einer Seite üblicherweise höher. Die Kräfte durch dynamische Einflüsse (wie Kurvenfahrt) bestimmen sich beispielsweise durch das Newtonsche Gesetz.

Die Last, die auf den verschiedenen Rädern ruht, bestimmt sich durch die entsprechenden mechanischen Gesetze, abhängig von der Beladung, der Gewichtsverteilung des Fahrzeugs oder dessen Beladung und der Kraftübertragung auf die einzelnen Räder. Dabei ist es auch entscheidend, welche Kräfte vom Fahrzeug über das Chassis und die Achsaufhängung und die Achse an die einzelnen Räder übertragen werden. Eine entsprechende Vorspannung hat hier Auswirkungen, z.B. wenn ein Hebevorrichtung härter gespannt ist, als eine andere eines anderen Rades, wird sich über jenen mehr der Gewichtskraft "abdrücken".

Den gleichen Effekt können Bodenunebenheiten bewirken, wenn ein Rad beispielsweise auf einer Bodenunebenheit steht und ein anderes nicht. In einem Fahrzeug ohne Ausgleich wird in diesem Fall auch über das Rad, welches auf der Bodenwelle steht, ein größerer Gewichtsanteil abgestützt. Oft ist es dann auch die erhöhte Lage dieses Rades (auf der Bodenwelle), die die Lage des Fahrzeugs bestimmt.

D.h. beim Überfahren einer Bodenwelle wird in einem Fahrzeug ohne Wankstabilisierung fast (wegen Federeffekt der Reifen) der gesamte Hub auf das Fahrzeug übertragen, was sich beim Überfahren der Bodenwelle entsprechend unangenehm oder schädlich für Material und Beladung auswirken kann.

Anstatt das Gewicht zu übernehmen, wird im Fall des Ausgleichs der Hub des entsprechenden Zylinders geringer, was zu einer Verdrängung der Hydraulikflüssigkeit in die anderen verbundenen Zylinder führt, die dadurch ihren Hub erhöhen. Dadurch fahren die beiden Räder, die nicht auf der Bodenwelle stehen aus, während das Rad auf der Bodenwelle von dieser nach oben gedrückt wird. Wank und Nickbewegungen werden dadurch reduziert und Radlasten bleiben möglichst gut verteilt.

Gleiches gilt für das Überfahren einer Furche, in die das Rad einsinken würde. Hier würde sich die Kraftwirkung der Hebevorrichtung entfalten können und das Rad in die Furche ausfahren, ggf. sogar so, dass das Rad in der Luft hängt, wenn die Hebevorrichtung an einen Anschlag kommt. Durch die Verteilung kann nun diese Hebevorrichtung ausgefahren, dafür die anderen eingefahren werden.
Insofern bezeichnet die "Verteilung" von Last in einer Ausführungsform lediglich, ein Übertragen auch nur eines Teils der Last von einem Rad oder Achse zu eine(m/r) anderen. Die Verteilung der Last an Vorder- und Hinterachsen einer Seite, durch die Verbindung der Hebevorrichtungen, führt dazu, dass Bodenunebenheiten an einem Rad in der Höhendifferenz nicht vollumfänglich auf das Chassis wirken. Wank- und auch Nickbewegungen werden in diesem Fall reduziert und Belastung des Fahrzeugs, der Beladung und Besatzung verringert, dadurch Komfort und Sicherheit erhöht und Abnützung und Verschleiß verringert.
Durch die Reduktion des Wankens am Hauptchassis verbessert sich gleichzeitig die Reihen- und Tiefenführung des Rodevorsatzes, da das Chassis ausgeglichener steht und die Bodenbewegungen nicht in dem Maße mitmacht, wie einzelne Räder, sondern in einem ausgeglicheneren Verhältnis der Stellung der mindestens drei Achsen steht. Eine bessere Rodetiefenführung bewirkt weniger Erdaufnahme, eine exaktere Reihenführung durch die geringeren Wankbewegungen bewirkt weniger Rübenbeschädigung und dadurch weniger Rodeverluste.
Die Traktion wird verbessert, da das System frei ist von jeglicher Vorspannung, was wiederum überhöhte Einzelradlasten verhindert und so bodenschonender ist.
Höherer Fahrkomfort ergibt sich auch bei Schrägfahrten (schräg zur Bearbeitungsrichtung des Feldes) oder auf dem Vorgewende. Erfindungsgemäß ist die Hebevorrichtung ein hydraulischer Zylinder, der eine bodenseitige und kolbenstangenseitige Kammer besitzt und bei dem die Verbindung hydraulisch ausgebildet ist und mit den miteinander verbundenen Zylindern ein hydraulisches Netzwerk bildet.
Hier ist die Achsabstützung, bzw. -aufhängung durch hydraulische Komponenten realisiert, d.h. die Achsen oder Achsträger sind hydraulisch mittels Zylindern am Chassis aufgehängt oder abgestützt.

Für eine hydraulische Achsabstützung, bzw. -aufhängung, existieren an jeder Achse Hydraulikzylinder, die die Hebevorrichtungen darstellen. Die Zylinder können die Achse abstützen (daher auch Stützzylinder oder Stabilisierungszylinder genannt), wobei das Eigengewicht des Fahrzeugs den Zylinder zusammen zu drücken versucht (sofern nicht die mechanische Konstruktion die Last aufnimmt). Sie können aber auch invers montiert sein, wenn z.B. das tragende Teil des Chassis an dem der Zylinder montiert ist unterhalb der Achse verläuft; in diesem Fall würde das Eigengewicht des Fahrzeugs versuchen, den Zylinder auseinander zu ziehen.

Die Montage erfolgt üblicherweise so, dass der Zylinder bodenseitig am Chassis und kolbenstangenseitig an der Achse befestigt ist. Eine umgekehrte Befestigung ist genauso denkbar, diese muss auch nicht für alle Aufhängungen einheitlich sein. Für die vorliegende Beschreibung wird jedoch davon ausgegangen, dass die Bodenseite oben liegt und am Chassis befestigt ist und in dieser ein hydraulischer Druck aufgebaut werden muss, um das Chassis auf einem gewünschten Abstand von der Achse zu halten.

Je nachdem, wie die Zylinder eingebaut sind, ob die Achse gehängt oder getragen ist und wie herum sie zwischen Achse und Chassis montiert sind, gibt es eine Kammer des Zylinders, die bei Druckaufbau den Höhenabstand zwischen Rad und Chassis erhöht. Dies wird im Folgenden als bodenseitige Kammer bezeichnet, so wie es auch in den Figuren zeichnerisch dargestellt ist. Der Fachmann weiß dadurch die Begriffe "kolbenstangenseitig" und "bodenseitig" in Abhängigkeit vom Einbau richtig zu interpretieren.

Ein Zylinder jeder Achse wird nun über eine Verbindungsleitung (z.B. Schlauch) hydraulisch mit wenigstens einem anderen Zylinder verbunden. Dadurch wird ein hydraulisches Netzwerk gebildet, also ein abgeschlossenes System in dem sich der Druck über die Hydraulikflüssigkeit ausbreitet. Solange keine Leckagen oder Pumpen oder Tanks an dem Netzwerk angeschlossen sind, bleibt das Volumen im Netzwerk konstant, wenn man davon ausgeht, dass die Hydraulikflüssigkeit inkompressibel ist.

Ggf. können die Verbindungen zwischen den Zylindern auch durch andere hydraulische Bauelemente beeinflusst sein (Druckminderer, Umsetzer, etc.).

Eine Pumpe fördert die Hydraulikflüssigkeit in das System und bewirkt eine Erhöhung der Flüssigkeitsmenge, wodurch sich das Volumen in dem Netzwerk erhöht. Ein Tank bewirkt ein Aufnehmen oder Spenden von Hydraulikflüssigkeit mit wenig Gegendruck, je nach Bedarf des Netzwerks. Aufgrund von Filterwiderstand und dem möglichen Anschluss und zur Gewährleistung der korrekten Funktionalität von Rückschlagventilen, die in einem Kreis vorhanden sein können, wird der Tankdruck höher als der Umgebungsdruck eingestellt.

Beim Überfahren einer Furche mit einem Rad nimmt die Gegenkraft des Bodens an diesen Zylinder ab, so dass dieser dem Druck im Netzwerk nachgibt und ausfährt. Da das Volumen im Netzwerk konstant ist, fahren die anderen Zylinder der anderen Achsen derselben Seite ein. Dies geschieht, bis das Rad in der Furche wieder entsprechende Bodenhaftung mit Gegenkraft hat, oder in den Anschlag fährt oder an eine andere Begrenzung stößt. Auch hier wird im Normalfall (ohne Begrenzungseinwirkung) die Last verteilt, dafür wird das Fahrzeug geneigt. Wenn beide Räder der betreffenden Achse in die Furche fahren, senkt sich das ganze Fahrzeug, wenn der Freiheitsgrad der Achsen dies zulässt.

Diese hydraulische Verschaltung benötigt nicht zwangsläufig eine elektronische Steuerung. Dies kann die Komplexität des Systems verringern und damit die Wartungsanfälligkeit und Herstellungskosten.

Optional kann natürlich auch eine elektronische Steuerung in das System eingreifen, dies würde insbesondere dann sinnvoll sein, wenn weitere Funktionalitäten integriert werden sollen.

Die Kippgefahr wird verringert und die Hangstabilität erhöht, da durch die Schwerpunktverlagerung (z.B. am Seitenhang) der Druck in den Zylindern auf der Tal- oder Kippseite steigt. Dieser steigt somit aber auf allen Achsen und alle Achsen nehmen dieses Mehr an Druck auf der Talseite auf.

In einer besonderen Ausführungsform ist die selbstfahrende Erntemaschine, dadurch gekennzeichnet, dass jede Achse durch einen linken und einen rechten Zylinder abgestützt oder aufgehängt ist und die Zylinder über zwei getrennte hydraulische Netzwerke derart verbunden sind, dass die Last auf die Räder für jede Seite getrennt verteilt wird.

Üblicherweise ist ein Zylinder pro Rad vorgesehen, d.h. an jeder Achse befinden sich auch zwei Zylinder, an denen die Achse hydraulisch mit dem Chassis verbunden ist und dieses tragen. Dadurch stützt jeder Zylinder im Wesentlichen ein Rad.

Es liegen zwei Netzwerke vor, eines zur Abstützung der linken, eines zur Abstützung der rechten Räder. Da auch für die zweite Kammer der Zylinder eine hydraulische Verbindung zusätzlich möglich ist, kann es streng genommen zwei mal zwei Netzwerke geben.

Eine derartige hydraulische Anordnung kann eine Selbststabilisierung des Systems allein durch mechanische/hydraulische Einflüsse für beide Seiten bewirken. Es ist nicht zwingend eine Steuerung oder Regelung, insbesondere elektronischer Art notwendig.

In einem Ausführungsbeispiel besitzt wenigstens eine Achse mindestens einen Freiheitsgrad weniger, als wenigstens eine der beiden anderen Achsen.

Freiheitsgrad bezeichnet die Bewegungsmöglichkeit der Achse im Bezug auf das Fahrzeug, welches das Bezugssystem ist. Üblicherweise ist der Bezug zum Chassis identisch wie der zum Fahrzeug, außer, wenn dieses so konstruiert ist, dass sich ein Teil des Chassis, an dem die Achse befestigt ist, gegenüber anderen wesentlichen Teilen des Chassis oder Fahrzeugs beweglich ist, insbesondere gegenüber dem, an dem die anderen Achsen befestigt oder aufgehängt sind.

Unerwünschte Freiheitsgrade werden entsprechend den Regeln des Fahrzeugbaus z.B. mittels Quer- und Längslenkern oder Gelenken eingeschränkt, die die Haltefunktion für die Achse übernehmen.

Ob die Achse mit einem eingeschränkten Freiheitsgrad als Vorder- oder Hinterachse ausgebildet wird, hängt von dem Anwendungszweck des Fahrzeugs ab. Bei Rodern mit einer Erntegutaufnahme vorne ist es zweckmäßig die Vorderachse derartig auszubilden.

Insbesondere sollte diese Achse auch eine allein stehende Achse, d.h. mit einem größeren Abstand der Achse von anderen, sein, um den Effekt optimal auszunutzen.

In einem Ausführungsbeispiel kann die wenigstens eine Achse, die einen Freiheitsgrad weniger besitzt, keine vertikale Translationsbewegung gegenüber dem Teil des Chassis ausführen, an dem die wenigstens eine andere Achse abgestützt oder aufgehängt ist.

Eine vertikale translatorische Bewegung ist eine Translation von oben nach unten, oder unten nach oben, sprich die Höhe des Körpers (der Abstand in vertikaler Richtung) kann sich ändern. Vertikal bedeutet normalerweise rechtwinklig zur Erdoberfläche, hier meist senkrecht zum Fahrzeug, da das Bezugssystem für die Achsen das Fahrzeug oder sein Chassis ist.

Die Achse bewegt sich dann nicht vertikal, wenn es einen Punkt auf der Achse gibt, der sich nicht gegenüber dem Teil des Chassis vertikal bewegt, an dem die wenigstens eine andere Achse abgestützt ist. Auf diese Achse montierte Räder hingegen könnten sich schon translatorisch vertikal (nach oben und unten) bewegen.

Meist sind alle Achsen über entsprechende Gelenke an einem starren Chassis aufgehängt, bzw. zumindest an einem Chassis, dessen bewegliche Teile sich nicht vertikal translatorisch bewegen. In diesem Fall kann die Achse sich nicht vertikal translatorisch, sprich in der Höhe oder dem Abstand zum Chassis ändern. Sie kann aber andere Freiheitsgrade haben, wie z.B. drehbar gelagert sein oder horizontal translatorisch verschiebbar sein.

In diesem Fall könnte vereinfacht beansprucht werden, dass die Achse, die einen Freiheitsgrad weniger besitzt als wenigstens eine andere (der beiden) Achse, keine vertikale Translationsbewegung gegenüber dem Chassis ausführen kann.

Ein Knickgelenk mit einer vertikalen Rotationsachse, das zwei Chassisteile derart verbindet, dass das vordere gegenüber dem hinteren schwenken kann, beinhaltet dennoch eine Starrheit in vertikaler Richtung, d.h. das Chassis würde nicht die vertikal translatorische Bewegung der in diesem Freiheitsgrad eingeschränkten Achse übernehmen.

Falls ein Gelenk für beispielsweise eine solche drehbare Lagerung nicht mittig auf der Achse angebracht wird, so wäre der Drehpunkt nicht mehr auf der Achse, sondern, z.B. darüber, beispielsweise, wenn das Drehgelenk (z.B. ein Drehkranz) im Chassis vorhanden ist, der das Chassis in zwei Teile teilt und die Achse an einem und die andere Achse am anderen Teil befestigt ist.

In diesem Fall würde es keinen festen Punkt auf der Achse geben (d.h. einen Punkt den man auf der Achse markieren könnte), der sich nicht bewegt, sondern im Bezug auf das andere Teil des Chassis gibt es einen Punkt durch den ein Punkt der Achse verläuft, der sich nicht translatorisch vertikal bewegt. Das ist wie bei einem sich drehenden Rad, das sich nicht vom Boden abhebt (d.h. vertikal translatorisch), wobei es aber doch keinen Punkt auf der Radoberfläche gibt, der sich nicht während der Drehung vom Boden abhebt (also vertikal translatorisch) bewegt. Wäre theoretisch bei diesem Rad der Drehpunkt auf dem Boden, so gäbe es tatsächlich einen Punkt auch auf dem Rad der sich nicht vertikal translatorisch bewegt. Genauso wie bei einer Achse deren Drehpunkt durch die Achse verläuft.

In diesem Ausführungsbeispiel würde die wenigstens eine andere Achse in der Höhe gegenüber dem Chassis veränderlich sein, d.h. sich translatorisch vertikal bewegen können. Das macht hier den unterschiedlichen Freiheitsgrad aus. Die Zylinder bestimmen hier die Höhe der weiteren Achsen zum Chassis. Sie sind so aufgehängt, das der Achsmittelpunkt Abstand zum Chassis verändert werden kann, was die vertikal translatorisch eingeschränkte Achse nicht kann, nur dann kann die Achse sich der Quer-Bodenwelle anpassen.

Die Achse, die einen Freiheitsgrad weniger besitzt, sollte eine Randachse des Fahrzeugs (d.h. vorderste oder hinterste) sein. Wäre diese Achse in der Mitte des Fahrzeugs und fährt mit dieser auf eine Quer-Bodenwelle, so würde diese Achse keine Hubänderung des Zylinders erfahren und daher keinen Druck im System aufbauen. Obwohl beide anderen Achsen ausgefahren werden müssten. Das geht nicht, bei konstanter Menge der Hydraulikflüssigkeit.

Auf der Hinterachse würde es prinzipiell funktionieren, auch wenn die anderen Achszylinder schnell in Anschlag gehen würden, falls der Abstand der Achsen entsprechend ist, z.B. die zweithinterste Achse recht dicht an der hintersten liegen würde.

In einem Ausführungsbeispiel ist die Achse, die einen Freiheitsgrad weniger besitzt, pendelnd gelagert.

Hierbei ist die Achse die einen Freiheitsgrad weniger besitzt und sich nicht vertikal translatorisch bewegen kann, eine pendelnd gelagerte Achse, deren Rotationsachse in Fahrzeuglängsrichtung liegt und die somit quer pendeln kann. Es wird auch die Bezeichnung Pendelachse verwendet, wobei die Achse an sich in der Regel starr ausgeführt ist, also ohne Gelenk zwischen beiden Radaufhängungen, so dass sich die Radaufhängungen nicht gegeneinander bewegen können. Die pendelnde Lagerung kann durch ein Drehgelenk z.B. auf der Fahrzeuglängsachse realisiert sein. Die beiden Zylinder sind an der Achse links und rechts vom Drehgelenk montiert.

Im Unterschied dazu können die wenigstens zwei anderen Achsen lenkeraufgehängt sein, z.B. mit einem Längslenker und einem Querlenker. Diese müssen so ausgebildet sein, dass sich die Achsen auch hoch und runter bewegen und quer pendeln können.

Dadurch können diese Achsen quer pendeln (wanken) und sich in der Höhe ändern. Dadurch lässt sich ein Wankausgleich bei Bodenunebenheiten (die insbesondere auf einzelne Räder wirken) erreichen.

Der positive Effekt eines Nickausgleichs kann sich (nur) bei diesen wenigstens zwei Achsen auswirken, da die Pendelachse die komplette Erhöhung einer Querbodenwelle, die auf beide Räder gleichzeitig wirkt, auf das Chassis übertragen würde.

Bei einer pendelnd gelagerten Achse führt das Heben nur eines Rades zum Senken des anderen Rades. Bei einer lenkergeführten Achse würde sich dieses andere Rad nicht zwangsläufig in seiner Höhe gegenüber dem Chassis ändern.
Die Anordnung zweier Zylinder an einer pendelnd gelagerten Achse bewirkt, dass der Druckunterschied/das Druckverhältnis zwischen linkem und rechtem Netzwerk auf die pendelnd gelagerte Achse mit übertragen wird und somit auf die Räder der Achse. Durch die hydraulische Verbindung zwischen den Achsen ist der Druckunterschied auf den frei beweglichen Achsen der gleiche Unterschied wie auf der pendelnd gelagerten Achse. Somit werden bei seitenungleicher Belastung des Fahrzeugs die Räder einer Seite gleichmäßig mehr (z.B. kurvenäußere, hanguntere) oder weniger (z.B. kurveninnere, hangobere) belastet.

Zum anderen bewirken die Netzwerke die Übertragung der Bewegung, die durch die Bodenkontur unter der pendelnd gelagerten Achse verursacht wird, anteilsmäßig auf das Chassis. Wenn sie nicht pendeln würde, dann wäre das Chassis viel unruhiger, da es genau der Kontur folgen würde.

Eine nicht an ein hydraulisches Netzwerk (oder sonstigen Ausgleichsmechanismus) angeschlossene pendelnd gelagerte Achse gleicht normalerweise einseitige Bodenunebenheit vollständig aus. Das Chassis würde sich beim Überfahren mit dieser Achse erst einmal gar nicht neigen und beim Überfahren mit den anderen (frei beweglichen) Achsen dafür die volle Bewegung (Hub des Chassis) ausführen.

Eine verbundene pendelnd gelagerte Achse wird jedoch einen Teil ihrer Bewegung (durch den hydraulischen Ausgleich) auf das Chassis übertragen und die Chassisbewegung in mehreren und damit kleineren Schritten durchgeführt.

Außerdem ist die Wankbewegung umso geringer, je mehr Achsen an das Netzwerk angeschlossen sind (die Ausgleichsbewegung eines Rades würde sich (bei gleichmäßigem Ausgleich) auf mehr Achsen aufteilen).

Der Neigungs-/Rotationswinkel der Achse wird dadurch bestimmt, wie die Bodenoberfläche ausgemittelt unter allen Rädern momentan ist. Durch die pendelnd gelagerte Achse kommt es zu einer Bewegungs- oder Kraftkopplung zwischen den beiden Netzwerken. Wenn die Achse ihren Neigungswinkel ändert, durch Bodenunebenheit oder Bewegung eines Zylinders, so bewegt sich auch der andere Zylinder und verschiebt dort die Hydraulikflüssigkeit ebenfalls, was sich wiederum auf den Hub der anderen Achsen (zumindest den auf der gleichen Seite) auswirkt.

Änderungen des Gewichts, insbesondere einseitig, führen auch zu einer Änderung der Druckverhältnisse an der pendelnd gelagerten Achse. Aber trotzdem bleibt die gleichmäßige Übertragung im Netzwerk erhalten. Das gleichmäßige Abstützen der pendelnd gelagerten Achse im Verhältnis zu den wenigstens zwei lenkeraufgehängten Achsen ist solange gegeben, bis ein Zylinder im Netzwerk in den Endanschlag geht.

Durch die Verwendung einer pendelnd gelagerten Achse, gibt es eine Beeinflussung der hydraulischen Netzwerke beider Seiten. Ändert sich der Hub in einem Zylinder dieser Achse, so wird durch die Einschränkung des Freiheitsgrades über das Drehgelenk der Hub auch auf den anderen Zylinder dieser Achse invers übertragen und die Hydraulikflüssigkeit im jeweiligen Netzwerk verschoben, so dass es zu einer Hubänderung auch der anderen beteiligten Zylinder kommt.

Eine Konstruktion eines zwei achsigen Fahrzeugs mit Wankstabilisierung durch zwei pendelnd gelagerte Achsen hat den Nachteil, dass diese nicht höhenverstellbar sind. Die vorgeschlagene Erntemaschine hingegen kann an den Achsen, die vertikal translatorisch beweglich sind (z.B. durch Lenkeraufhängung), in der Höhe verstellt werden. Üblicherweise macht man das dort, wo Lasten zu erwarten sind, z.B. unterhalb des Erntegutbunkers.

Gegenüber einer anderen Konstruktion, bei der die 2. Achse nicht hydraulisch gestützt, sondern diesbezüglich starr ist, ist bei einem solchen 3-Achser auch die 2. Achse quer anpassbar, d.h. die Räder sind in der Höhe beweglich und somit ruht weniger Belastung auf der 2. Achse beim Überfahren einer Bodenunebenheit.

Bei Bodenunebenheit gibt es einen Wankausgleich durch gemitteltes Wankverhalten des Chassis. Am Seitenhang gibt es eine gleichmäßige Verteilung der Last auf die Räder der Talseite (auch Bergseite). In der Kurvenfahrt gibt es eine gleichmäßige Verteilung der zunehmenden Last auf die Räder der Kurvenaußenseite.

Das Chassis (und Fahrzeug) neigt sich nicht mehr so weit, wie mit einer (hier nicht mehr vorhandenen) starren Achse. Dadurch kann sich das Fahrzeug gegen den Hang neigen, wenn es aktiv (durch Vorgabe eines Benutzers) abgestützt werden müsste.
Dazu müssen alle Zylinder aller Achsen entsprechend hydraulisch verbundenen sein.

In einer speziellen Ausgestaltung kann die selbstfahrende Erntemaschine dadurch gekennzeichnet sein, dass genau drei Achsen vorhanden sind, von denen eine pendelnd gelagert und die Vorderachse ist, die nicht in der Höhe gegenüber dem Chassis verstellbar ist, während die anderen beiden lenkeraufgehängt sind und im Wesentlichen eine vertikale Translationsbeweglichkeit und eine Rotationsfähigkeit um die Fahrzeuglängsachse aufweisen und die Hinterachsen sind, wobei jede Achse durch einen linken und einen rechten Zylinder abgestützt oder aufgehängt ist und die Zylinder über zwei getrennte hydraulische Netzwerke derart hydraulisch verbunden sind, dass die Last auf die Räder für jede Seite getrennt verteilt wird.

Prinzipiell lässt sich die Vorrichtung auch auf Fahrzeuge mit mehr als drei Achsen (z.B. bei einem Vier-Achser) übertragen. In direkter Fortführung der Idee würden weitere Hinterachsen genauso aufgebaut werden und an dieselben hydraulischen Netzwerke angeschlossen werden.
In einem Ausführungsbeispiel ist die Achse, die einen Freiheitsgrad weniger besitzt an einem Teil des Chassis befestigt, der über ein Kugelgelenk oder einen Drehkranz mit einem anderen Teil des Chassis verbunden ist, mit dem die wenigstens eine andere Achse abgestützt oder aufgehängt ist.

Wenn das Chassis so konstruiert ist, dass ein Teil des Chassis, an dem die Achse, die einen Freiheitsgrad weniger besitzt, befestigt ist, gegenüber anderen wesentlichen Teilen des Chassis oder Fahrzeugs beweglich ist, insbesondere gegenüber dem, an dem die anderen Achsen befestigt oder aufgehängt sind, dann wird der Freiheitsgrad durch die Beweglichkeit der beiden Teile des Chassis gegeneinander bestimmt.

Zum Beispiel ist dies dann der Fall, wenn die Teile des Chassis über einen Drehkranz oder Kugelgelenk verbunden werden und dadurch eine pendelnd gelagerte Achse durch eine Achse, die gegenüber dem Chassisteil an dem sie aufgehängt ist, nicht pendelt, ersetzt werden kann, da der Drehkranz oder Kugelgelenk im Fahrgestell die Pendelbewegung der Achse ersetzt.

Dabei wird ebenso die Beweglichkeit dieser einen Achse um einen Freiheitsgrad gegenüber einer anderen Achse eingeschränkt, hier nicht durch Aufhängung der Achsen, sondern konstruktive Maßnahmen am Chassis. Dies kann auch in Verbindung mit anderen Gelenken, z.B. einem Knickgelenk geschehen.

Der Pendelpunkt wird in das Chassis verlegt, zum Beispiel in den Kugelaufhängungspunkt. Auch andere Gelenke sind denkbar, sofern sie einen Freiheitsgrad der betreffenden Achse einschränken.

Die Stützzylinder sind in diesen Fällen anders angeordnet, da sie nicht die Achse stützen müssen, sondern die beiden Chassisteile untereinander. So müssen diese, wie bei der pendelnd gelagerten Achse, den jeweiligen Druck auf die linke, bzw. rechte Seite des Chassisteils ausüben und aufnehmen können. Das Gelenk, das die beiden Chassisteile verbindet, wird bevorzugt auch eine Drehbewegung ermöglichen. Diese Zylinder müssen so angeordnet sein, dass die Drehbewegung durch die translatorische Bewegung der Zylinder gebremst/blockiert/ermöglicht werden kann.

In einem Ausführungsbeispiel sind die Zylinder und deren Angriffspunkte so ausgelegt, dass der Kontaktflächendruck aller Räder einer Seite auf den Boden gleichmäßig werden kann.

Es könnten unterschiedlich große Räder, bzw. Reifen montiert sein, welche unterschiedliche Auflageflächen auf dem Boden haben und dadurch einen unterschiedlichen Kontaktflächendruck auf den Boden bewirken. Dieser Druck ist üblicherweise die zu minimierende Größe, insbesondere der Spitzendruck. D.h. der Druck soll gleich verteilt werden.

Sind auf einer Achse größere Räder (mit entsprechender Bereifung) montiert, kann auf dieser Achse eine höhere Last ruhen, ohne, dass der Kontaktflächendruck höher sein muss, als auf weniger belasteten Achsen mit kleineren Rädern.

Um eine Gleichverteilung des Kontaktflächendrucks auf den Boden zu erreichen, kann die Größe der Zylinder unter Berücksichtigung der geometrischen, bzw. konstruktiven Verhältnisse gewählt werden. Die Zylindergrößen, insbesondere deren Durchmesser, bzw. die Verhältnisse der Durchmesser der Zylinder auf den verschiedenen Achsen, bestimmen den Hub dieser Zylinder. Abhängig vom Angriffspunkt der Zylinder an der Achse, geometrischen Einflussgrößen, wie z.B. die Radstände und Gewichtsverteilung auf das Chassis, zu erwartende Beladung, ist das hydraulische System (im Besonderen die Zylindergrößen und Position der Angriffspunkte, insbesondere in Entfernung von der Fahrzeuglängsachse) zu parametrisieren. Daher können auf jeder Achse, oder gar an jedem Rad unterschiedliche Zylinder zum Einsatz kommen und/oder diese in unterschiedlichem Abstand von der Fahrzeuglängsachse montiert sein.

Bei einer Erntemaschine ist die Radbreite vorne oft schmäler gewählt, um Platz für den Transport des Ernteguts über oder unter der Vorderachse hindurch zu haben. Dabei müssen auch die Stützzylinder mehr nach außen zu den Rädern hin versetzt werden, d.h. deren Angriffspunkt auf der Achse liegt weiter außen, als bei den Zylindern der anderen Achsen. Dadurch haben die vorderen Zylinder einen größeren Hub zu bewerkstelligen, um eine gleiche Auslenkung des Rades zu ermöglichen, wie hinten. Um einen gleichen Pendelwinkel zu erreichen, wären vorne kleinere Zylinder (d.h. mit kleinerem Querschnitt) notwendig, da die Kraft durch das Hebelgesetz nicht mehr so groß sein muss. Weiterhin sollte der Maximalhub größer sein.

Die Gleichverteilung der Last durch die hydraulische Verbindung der Stabilisierungszylinder an Vorder- und Hinterachsen einer Seite, führt dazu, dass Bodenunebenheiten an einem Rad in der Höhendifferenz nur zum Reziproken der Anzahl der Achsen auf das Chassis wirken. D.h. bei gleichgroßen Zylindern und gleichen Hebelverhältnissen würde bei einem 3-Achser das Chassis z.B. 33 % der Bewegung mitmachen, bei einem 4-Achser 25 %. Natürlich stimmen diese Werte nicht unbedingt exakt, da es vielfältige mechanische Einflüsse geben kann. Auch ist hierbei eine Bewegung auf der anderen Fahrzeugseite nicht berücksichtigt.

Wankbewegungen werden in diesem Fall so weit wie möglich reduziert.

Nickbewegungen werden ebenso reduziert, allerdings nicht beim Überfahren einer Bodenwelle oder Furche mit der vertikal translatorisch unbeweglichen Achse. Die Belastung des Fahrzeugs, der Beladung und Besatzung wird dadurch optimal verringert, damit der Komfort, die Laufruhe des Fahrzeugs und die Sicherheit erhöht und Abnützung und Verschleiß verringert. Auch die Führung eines Rodeaggregats wird dadurch optimiert.

Es sind auch Anwendungen denkbar, bei denen keine Gleichverteilung gewünscht ist, sondern einzelne Achsen oder Räder mehr belastet werden sollen, beispielsweise um mehr Last durch stabiler ausgelegte/konstruierte Achsen aufzunehmen und weniger durch empfindlichere Achsen. Entsprechend der gewünschten Lastverteilung muss dann das hydraulische System parametrisiert werden.

In einem Ausführungsbeispiel ist jede Achse durch einen linken und einen rechten Zylinder abgestützt oder aufgehängt und die Zylinder sind über zwei getrennte hydraulische Netzwerke seitenweise verbunden, wobei alle Zylinder einer Seite untereinander mit der bodenseitigen Kammer hydraulisch miteinander verbunden sind.

In dieser Ausführungsform sind die Zylinder einer Seite mit ihrer bodenseitigen Kammer verbunden. In diesem Fall sollten die Zylinder gleichartig bzgl. der Achsabstützung montiert sein. Falls das System auf beiden Seiten existiert, was üblicherweise der Fall ist, so sind alle linken Zylinder bodenseitig zusammen in einem Netzwerk angeschlossen und alle rechten Zylinder getrennt von den linken ebenso in einem anderen Netzwerk.

Ein Zylinder jeder Achse wird nun mit der bodenseitigen Kammer über eine Verbindungsleitung (z.B. Schlauch) hydraulisch mit wenigstens einem anderen Zylinder verbunden.

Die kolbenstangenseitigen Anschlüsse können hier druckentspannt an den Tank angeschlossen werden.

Dies ist die einfachste Form der vorgeschlagenen Verbindung um die hydraulischen Netzwerke herzustellen, die die gewünschten Effekte erzielt.

In einem Ausführungsbeispiel ist jede Achse durch einen linken und einen rechten Zylinder abgestützt oder aufgehängt und die Zylinder sind über zwei getrennte hydraulische Netzwerke verbunden, wobei die kolbenstangenseitige Kammer des Zylinders einer Seite der wenigstens einen Achse, die einen Freiheitsgrad weniger besitzt und mit den bodenseitigen Kammern der Zylinder der anderen Seite der wenigstens einen anderen Achse verbunden ist.

Für die beabsichtigte Wirkung kann auch diese alternative Anschlussvariante gewählt werden. Falls beide Seiten in getrennten Netzwerken angeschlossen sind, laufen die Leitungen über Kreuz. Durch die Kreuzung wird der wenigstens eine Zylinder auf der anderen Seite, als auf der, auf der die Lastverteilung erfolgen soll angeschlossen. Dafür auch an der Kolbenstangen- statt an der Bodenseite. Dies führt bei Druckveränderung zu einem inversen Hub, wie wenn er auf der eigentlichen Seite bodenseitig angeschlossen wäre.

Bei der pendelnd gelagerten Achse wird über das Drehgelenk die Achse genauso bewegt, egal welche der beiden Anschlussarten Anwendung findet. Je nach konstruktiven Begebenheiten ist die eine oder andere Variante geeigneter.Dieses Überkreuzen der hydraulischen Verbindungen wird an der Achse gemacht, die vertikal translatorisch nicht beweglich ist. Durch den Anschluss der anderen Kammer des Zylinders an der gegenüberliegenden Seite in Zusammenhang mit dem Drehgelenk bewirkt das die gleiche Achsbewegung wie ein Anschluss der gleichen Kammer auf der gleichen Seite.

So könnte man auch den Zylinder einer Seite dieser drehbar gelagerten und vertikal translatorisch nicht beweglichen Achse einsparen, indem man für diese Achse einen Gleichlaufzylinder verwendet und dabei das linke Netzwerk auf einer Seite des Zylinders anschließt und das rechte auf der anderen. Die Anschlussseite soll dann zur gewünschten Bewegungsrichtung des Zylinders passen.

In einem Ausführungsbeispiel sind die Zylinder in dem Netzwerk auf der Seite mit der bodenseitigen Kammer hydraulisch mit allen kolbenstangenseitigen Kammern der Zylinder auf der anderen Seite, die sich an den wenigstens zwei Achsen befinden, die vertikal translatorisch beweglich sind, verbunden.

Hierbei werden nicht nur die Zylinder längs (zwischen den Achsen) des Fahrzeuges sondern auch quer (auf einer Achse) hydraulisch verbunden. Die Querverbindung geschieht über eine Kreuzschaltung von der rechten Bodenseite zur linken Kolbenstangenseite und vice versa auf jeder Achse.
Durch den fehlenden vertikalen translatorischen Freiheitsgrad einer Achse, kann der hydraulische Anschluss an entweder der bodenseitigen Kammer, oder der kolbenstangenseitigen Kammer beider Zylinder auf dieser Achse entfallen. Die Zylinder können hier nur den Neigungswinkel dieser pendelnd gelagerten Achse bestimmen und keine Translation bewirken.
Durch die zusätzliche Kreuzschaltung über beide Seiten des Fahrzeugs könnte das aktive Steuern der Kolbenstangenseite zum Zweck der Kippsicherung (siehe unten erläutert) der gegenüberliegenden Fahrzeugseite erübrigt werden.Der ansonsten vorzuhaltende Drucksensor kann bei dieser Anschlussvariante entfallen. Erfindungsgemäß ist ein Volumen an Hydraulikflüssigkeit in dem Netzwerk änderbar.
Wenn die hydraulisch verbundenen Zylinder eines Netzwerks mittels einer Druckquelle oder -senke anschließbar sind, so lässt sich das Volumen der Flüssigkeit in dem Netzwerk ändern, was zu einer Hubänderung der beteiligten Zylinder führt und damit zu einer Höhenänderung des Fahrzeugs. Auch auf den Hub eines Zylinders einer vertikal translatorisch nicht beweglichen Achse hat das eine Neigungswirkung zur Folge, mit der Konsequenz, dass sich das Fahrzeug neigen würde. Je nachdem ob Volumen zugeführt, bzw. abgelassen wird und auf welcher Seite, neigt sich das Fahrzeug dann nach rechts oder links.
Wenn im Netzwerk der anderen Seite die gleiche Volumenänderung vollzogen wird, neigt sich das Fahrzeug nicht, sondern ändert seinen Abstand vom Boden (Bodenfreiheit).
Falls eine Achse keine vertikal translatorische Bewegungsmöglichkeit hat, findet auf dieser Achse keine Höhenänderung statt, sondern nur bei den anderen.
Die Zuführung von Hydraulikflüssigkeit aus einer Druckquelle geschieht durch Schalten des Netzwerks mittels eines Ventils an eine Pumpe, was zur Volumenerhöhung im Netzwerk führt. Das Schalten eines (ggf. anderen) Ventils an einen Tank oder Ablass führt zur Volumensenkung im Netzwerk. Beides sollte über eine Drossel geschehen um das Volumen langsam auf- oder abzubauen.

Durch diese Ausgestaltung kann das Chassis und damit das Fahrzeug eine gewünschte Höhe oder Neigungswinkel einnehmen, was sich als Hangneigungskorrektur (beim Fahren am Seitenhang) oder Höheneinstellung anwenden lässt.

Überdies erfolgt am Seitenhang ein Ausgleich der Radlasten zwischen Vorder- und Hinterachsen bei zunehmender Hangneigung. Ergänzt wird das System um einen Hangausgleich für mehr Stabilität und Fahrkomfort am Seitenhang. Dieser kann elektronisch und vollautomatisch oder manuell gesteuert sein.

Mit Neigungssensoren an Chassisvorderteil und/oder Chassishinterteil wird der Neigungswinkel des Hauptrahmens zur Horizontalen gemessen. Fährt die Maschine am Seitenhang, so wird die komplette Maschine mittels der Stabilisierungszylinder an den pendelnd und translatorisch gelagerten Achsen (z.B. um bis zu 5 Grad) zum Hang hin geneigt. Ein Winkelgeber erfasst den Pendelwinkel der pendelnd gelagerten Achse, ein jeweils in den Stützzylinder integriertes Wegmesssystem erfasst die Position der Stützzylinder auf den frei beweglich angehängten Achsen. Entsprechend der Signale dieser Sensoren erfolgt die Ausrichtung der Maschine vollautomatisch. Auch beim Wenden am Vorgewende regelt das Fahrwerk und neigt die Maschine stets zum Hang hin.

Ein Zylindermesssystem in den Zylindern misst die Position des Kolbens im Zylinder, also den aktuellen Hub. Es soll vermieden werden, dass die Zylinder in einen Anschlag fahren und so der Radlastausgleich nicht mehr wirksam ist, da sich bei einem Zylinder im Anschlag die Last dieses Rades keinen Einfluss auf den Druck im Netzwerk mehr hat und so die Wirkung eingeschränkt wird.

Insbesondere können die Informationen dieser Sensoren verwendet werden, die Höhe und den Neigungswinkel des Fahrzeugs günstig zu steuern oder zu regeln.

Für den Anwendungsfall der Fahrt auf einer Straße macht es Sinn, das Fahrwerk tiefer zu legen um beispielsweise den Schwerpunkt tiefer zu legen, höhere Kurvenstabilität zu erreichen, die maximal zulässige Gesamthöhe von z.B. 4 m nicht zu überschreiten oder den Kardanwinkel des Antriebsstranges optimal einzustellen.

In einem Ausführungsbeispiel kann eine Hydraulikflüssigkeit in einem weiteren Netzwerk mit wenigstens einer angeschlossenen kolbenstangenseitigen Kammer wenigstens eines der bodenseitig hydraulisch verbundenen Zylinder eines Netzwerks nicht mehr aus dem weiteren Netzwerk entweichen.

Bei den hydraulisch verbundenen Zylindern, sind die Kammern verbunden, die die Kraft der Last übertragen und durch ihren hydrostatischen Druck eine Gegenkraft aufbauen. Üblicherweise sind das die Kammern, auf die eine Kompressionskraft wirkt.

Im normalen Betriebszustand sollte die gegenseitige Kammer, auf die diese Kraft nicht wirkt kraftfrei sein, z.B. an einen Tank angeschlossen.

In dem außergewöhnlichen Betriebszustand, dass das Fahrzeug droht zu kippen, insbesondere durch Schwerpunktverlagerung auf eine Seite, ist es notwendig, ein möglichst großes Gegengewicht auf der anderen Seite (beispielsweise der Hangseite) aufzubauen.

Im Moment des Kippens geben evtl. die Zylinder der Räder auf der Gegenseite der Kipprichtung nach. Bei ungenügendem Druck im Netzwerk fahren die Kolben der Zylinder voll aus. Bis diese in den Anschlag kommen, wirkt die Gewichtskraft dieser Räder nicht als Gegenkraft gegen das Kippen. Um dieses zusätzliche Gewicht nutzbar zu machen, wird die Verbindung der kolbenstangenseitigen Zylinderanschlüsse zum Tank so geschaltet, dass sie gesperrt sind und keine Hydraulikflüssigkeit in den Tank zurück fließen kann. Dies bewirkt einen kolbenstangenseitigen Gegendruck im Zylinder, so dass der Kolben nicht weiter ausgefahren werden kann und das Rad bei einem weiteren Kippen mit abheben müsste. Dafür ist aber dessen Gewichtskraft zusätzlich zu überwinden, da die Achsen und Räder mit ihrem Gewicht am Chassis dran hängen. Außerdem verlagert sich der Kippdrehpunkt von dem kippseitigen Zylinderangriffspunkt zum kippseitigen Rad, was einen viel ungünstigeren Kipphebelarm bewirkt. Diese Maßnahme führt zu einer Kippsicherung.

Eine einfache Ausführungsform besteht aus einem Ventil, das den Anschluss zum Tank entweder sperrt, oder öffnet. Durch eine entsprechende Anordnung von Sicherheitssperrventilen oder Rückschlagventilen sollte sichergestellt werden, dass aber neue Hydraulikflüssigkeit von selber aus dem Tank in die Kolbenstangenseite des Zylinders zurück fließen kann.

Eine andere Ausführungsform beinhaltet statt dem Sperren des Tankanschlusses ein Umschalten auf eine Druckquelle. Hierdurch wird aktiv ein schnellerer Gewichtseinfluss durch eventuelles schnelles Abheben des Rades bewirkt.

An der Kolbenstangenseite der Achse ohne vertikale translatorische Beweglichkeit ist dies jedoch nicht notwendig, da der bodenseitige Zylinderdruck auf der Kippseite zusammen mit der vertikalen Fixierung (z. B. durch ein Drehgelenk) bewirkt, dass das der Kippseite gegenüber liegende Rad auch mit angehoben wird und dessen Gewichtskraft unterstützt. Würde auch diese Achse gesperrt, hätte dies Auswirkungen auf die gleichmäßige Lastverteilung in Längsrichtung.

Die kolbenstangenseitigen Anschlüsse können natürlich auch seitenweise über die Achsen hinweg verbunden sein, so das der Schaltmechanismus nur einmal für alle Achsen vorgehalten werden muss und nicht jeder Zylinder (bzw. dessen kolbenstangenseitige Kammer) gesperrt wird, sondern alle gemeinsam, so dass eine Sperrung bewirkt, dass das Volumen der Hydraulikflüssigkeit nicht abnimmt.

Über einen Drucksensor kann festgestellt werden, ob der Druck in den hydraulisch verbundenen Zylindern so weit abnimmt/unterschritten wird, dass ein ungewolltes oder vollständiges Ausfahren der Zylinder möglich ist oder gerade geschieht. Wird dies festgestellt, wird eine entsprechende Maßnahme (wie beschrieben) ergriffen.

In einer alternativen Variante kann anstatt einer Sperrung der Kammer auch eine Druckquelle angeschlossen werden, ggf. nur sehr kurzfristig, bis das Gewicht des Rades am Chassis hängt. Die Kolbenstangenseite wäre dann schaltbar an eine Pumpe angeschlossen, die einen notwendigen Druck aufbaut und so eine Kraftkapplung zwischen Rad und Chassis herstellt. Ggf. wird dabei der Zylinder eingefahren und das Rad in Richtung Chassis bewegt.

In einem Ausführungsbeispiel kann eine Druckdifferenz zwischen wenigstens zwei kolbenstangenseitigen Kammern derjenigen bodenseitig hydraulisch verbundener Zylinder eines Netzwerks hergestellt werden, deren Zylinder sich an wenigstens zwei Achsen befinden, die vertikal translatorisch beweglich sind.

Wenn sich der Lastzustand des Fahrzeugs ändert, weil beispielsweise die Beladung vorhanden oder nicht vorhanden oder das Fahrzeug durch Umbaumaßnahmen eine andere Gewichtsverteilung hat, dann stimmt die hydraulische Dimensionierung des Systems evtl. nicht mehr, die für diese Lasten ausgelegt wurde. Dies ist z.B. bei der Fahrt auf der Straße der Fall, wenn das Rodeaggregat auf einem Anhänger hinterher gezogen wird, anstatt wie auf dem Feld an der Vorderseite des Fahrzeugs montiert ist und dadurch eine zusätzliche Gewichtslast auf die Vorderachse bringt.

Wird die Vorderachse so entlastet, so liegt ein übermäßig hohes Gewicht auf beiden Hinterachsen. Durch Entlastung der 2. Achse steigt das Gewicht auf der Vorderachse wieder an. Umgekehrt, wenn die Vorderachse zu stark belastet ist, so kann durch Entlasten der hintersten Achse die Last von der Vorderachse auf die nächste Achse verlagert werden.

Dies kann dadurch geschehen, dass kolbenstangenseitig auf der 3. Achse Druck aufgebaut wird, wodurch ein Gegendruck zur Bodenseite entsteht, der den Hub der Zylinder an der 3. Achse verringert, d.h. die Achse wird näher zum Chassis gezogen; weiterhin erhöht sich der Druck bodenseitig in den verbundenen Zylindern, was zu einem höheren Hub der Zylinder an der 2. Achse führen kann. Dadurch wird Last von der 3. auf die 2. Achse verlagert. Die Kolbenstangenseite ist daher schaltbar an eine Pumpe angeschlossen, die einen notwendigen Druck aufbaut, bis der Zufluss wieder unterbrochen und die Kammer gesperrt wird um die Menge an Hydraulikflüssigkeit aufrecht zu erhalten.

Gleiches gilt für eine Verlagerung der Last von der 3. auf die 2. Achse. Hierzu muss die vorgeschlagene Vorrichtung eben an der kolbenstangenseitigen Seite der Zylinder der 2. Achse vorhanden sein.

Der Wankausgleich ist hierbei immer noch funktionsfähig. Ggf. muss dabei Kolbenstangenseitig noch ein Speicher angeschlossen werden.

Üblicherweise führt man diese Maßnahme bei einzelnen Achsen durch, da man die zu erwartenden Lastverhältnisse für unterschiedliche Betriebszustände abschätzen kann. Ggf. kann auch eine Verschaltung mehrerer Achsen an eine gemeinsame Druckquelle sinnvoll sein.

Bei anderen Parametrierungen des Hydrauliksystems ist das Prinzip auch auf andere Achskombinationen übertragbar, z.B. wenn die 1. Achse entlastet werden soll. Dazu wird die Achslast von der 3. Achse weggenommen und von der 2. Achse übernommen.
In einem Ausführungsbeispiel ist ein Speicher an wenigstens einem der hydraulischen Netzwerke angeschlossen.
In einer weiteren Ausgestaltung ließe sich das System auch hydropneumatisch ergänzen und somit eine Federungsfunktion realisieren. Üblicherweise wird hierzu eine Hydraulikleitung über einen Membran mit einem Stickstoffspeicher verbunden, um durch Hubänderungen der Zylinder hervorgerufene Druckänderungen im Netzwerk abzufedern, indem diese Speicher z.B. mit den bodenseitigen Kammern der Zylinder verbunden wird. Dieser Speicher ist im Volumen veränderlich, da der Stickstoff kompressibel ist und so die Federungsfunktion bewirkt. Erfindungsgemäß kann das Volumen an Hydraulikflüssigkeit in dem bodenseitig verbundenen Netzwerk auf einer Seite um die Menge reduziert werden, wie sie im bodenseitigen Netzwerk (28, 27) der anderen Seite erhöht wird und umgekehrt.
Das Aktivieren der Kippsperre kann auf der gesperrten Seite zu einer mechanischen Verspannung führen, wenn kein Ausgleich auf der anderen Seite durchgeführt wird. Abhilfe kann eine Vorrichtung, wie z.B. ein Tandemzylinder schaffen, der dazu dient, bei einer Volumenänderung in einem Netzwerk einer Seite eine inverse Volumenänderung im Netzwerk der anderen Seite zu bewirken. Es ist auf diese Art und Weise sowohl die Entnahme und Zufuhr von Volumen (bzw. Hydraulikflüssigkeit) nur in den linken bzw. rechten bodenseitigen Netzwerken darstellbar, als auch in einer Variante in den linken bzw. rechten bodenseitigen Netzwerken und zusätzlich in den linken bzw. rechten kolbenstangenseitigen Netzwerken zugleich.
Erfuindungsgemäß wird ein Verfahren zur Verteilung einer Last über alle Achsen einer Fahrzeugseite, bei einer erfindungsgemäßen selbstfahrenden Erntemaschine vorgeschlagen, mit einer linken und rechten Fahrzeugseite, mit einem Chassis oder Karosserie, mit mindestens drei Achsen, welche geeignet sind für die Aufnahme von Rädern bzw. dergleichen Rollvorrichtungen, wobei diese mindestens drei Achsen oder deren Achsaufhängung über Hebevorrichtungen am Chassis abgestützt oder aufgehängt sind und wenigstens eine Hebevorrichtung jeder Achse mit wenigstens einer Hebevorrichtung jeder anderen der mindestens drei Achsen in Verbindung steht, derart, dass die Verbindung geeignet ist, die Last, die auf die Räder einer Seite des Fahrzeugs wirkt, auf alle Räder derselben Fahrzeugseite zu verteilen. Weiterbildungen können entsprechend den Merkmalen vorangegangener Unteransprüche und Beschreibungsteilen ausgebildet sein.

In einer weiteren Ausgestaltung ließe sich eine Boogieachse verwenden.

So könnte insbesondere die Achse, die einen Freiheitsgrad weniger besitzt, als Boogieachse realisiert sein.

Evtl. sollten gleichzeitig auch "Federwegbegrenzer" mit eingebaut werden, denn ansonsten würden die Räder z.B. am Kotflügel oder am Aufbau Beschädigungen verursachen, wenn zu stark eingefedert wird und die Räder Kontakt mit etwas anderem als dem Boden haben. Bei den Boogie Achsen ist aber zu bedenken, dass beide Achsen denselben Druck auf den Boden ausüben, auch wenn der Anhänger leicht nach vorne oder nach hinten geneigt ist.

### Beschreibung der Zeichnungen

Ausführungsbeispiele der Erfindung sind in den Zeichnungen dargestellt und in der nachfolgenden Beschreibung näher erläutert.

Es zeigen
Figur 1 eine Schrägansicht eines Chassis mit aufgehängten Achsen und hydraulischer Verbindung,
Figur 2a einen hydraulischen Schaltplan für die seitengetrennte hydraulische Verbindung mit räumlicher Darstellung des Fahrwerks,
Figur 2b einen hydraulischen Schaltplan für die seitengetrennte hydraulische Verbindung mit Darstellung der pendelnd gelagerter Achse,
Figur 2c einen hydraulischen Schaltplan für ein Fahrzeug mit vier Achsen.
Figur 2d einen hydraulischen Schaltplan für ein Fahrzeug mit drei Achsen, jedoch mit einer andersartigen Kippsicherung per permanent vorhandener Vorspannung der Kolbenstangenseiten,
Figur 3 einen hydraulischen Schaltplan für die seitengetrennte hydraulische Verbindung mit einem kreuzweise kolbenstangenseitigen Anschluss
Figur 4 einen hydraulischen Schaltplan für eine Kreuzschaltung für einen Wankausgleich in Längs- und Querrichtung,
Figur 5a einen hydraulischen Schaltplan einer zusätzlichen Achslastregelung für die 3. Achse,
Figur 5b einen hydraulischen Schaltplan einer zusätzlichen Achslastregelung für die 2. Achse,
Figur 6 einen hydraulischen Schaltplan mit einem zusätzlichen Federungssystem,
Figur 7 einen hydraulischen Schaltplan mit einer Neigevorrichtung bei Volumenverschiebung.

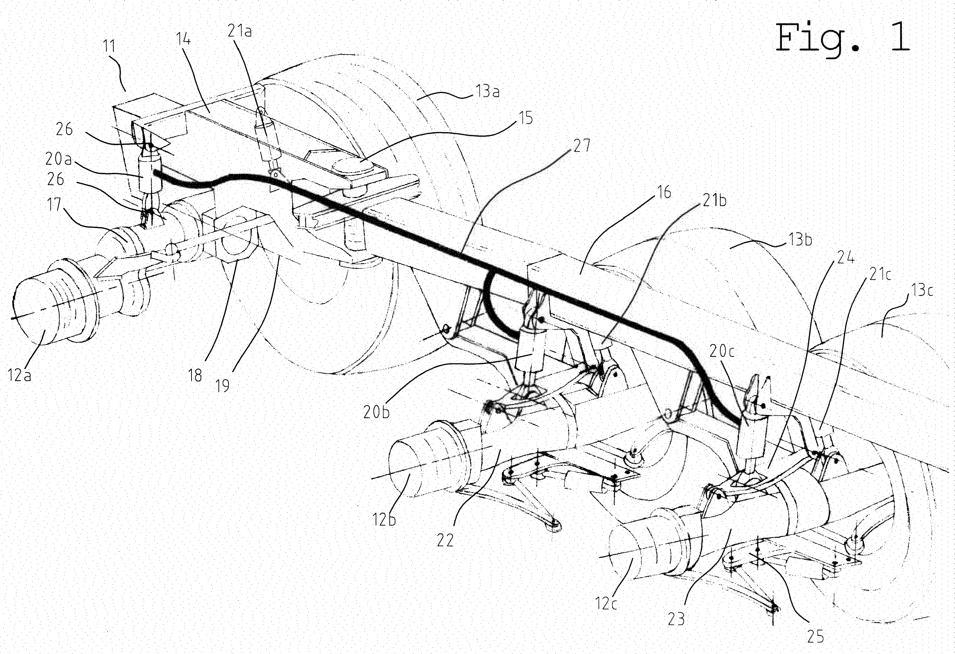

Figur 1 zeigt die Schrägansicht eines Chassis 11, mit Radaufhängungen 12a-c auf der linken Seite und auf derartigen Radaufhängungen montierten Rädern 13a-c auf der rechten Seite. Die Vorausrichtung ist in der Figur Richtung links oben. Das Chassis besitzt einen vorderen Teil 14, der über ein Knickgelenk 15 mit einem hinteren Teil 16 verbunden ist.

Das Chassis 16 ist als Mittelträger dargestellt, der auf der Fahrzeuglängsachse 19 liegt. In der Figur verdeckt dieser Teile, wie die rechten Zylinder 21a-c. Es sind drei linksseitige Zylinder 20a-c und verdeckt drei rechtsseitige Zylinder 21a-c gezeigt.

Die Vorderachse 17 ist über ein Drehgelenk 18, welches in einer Fahrzeuglängsachse 19 montiert ist verbunden. Dieser Punkt in der Fahrzeuglängsachse, an dem die Achse am Drehgelenk befestigt ist, kann sich in der Höhe gegenüber dem Chassis nicht bewegen und ist hier in einem Freiheitsgrad, dem vertikal translatorischen, eingeschränkt. Die Vorderachse 17 selber ist starr. Durch die drehbare Lagerung 18 können sich beide Endpunkte der Achse oder darauf montierte Räder 12a, 13a nicht gleichzeitig nach oben oder unten bewegen, sondern lediglich eine Pendelbewegung um die Drehachse 19 ausführen, bei der sich ein Rad hoch und das andere in gleichem Maße runter bewegt.

Gegenüber dem hinteren Teil des Chassis 16, an dem die Hinterachsen, d.h. eine zweite Achse 22 und eine dritte Achse 23 aufgehängt sind, hat die Vorderachse einen Freiheitsgrad weniger als die Hinterachsen, da sie sich nicht in der Höhe bewegen kann.

In der Figur sind weitere Teile eines Fahrgestells und der Achsaufhängung gezeigt, wie die Querlenker 24 oder Lenkgestänge 25. Die Querlenker sind nur an den Hinterachsen vorhanden, während die Vorderachse durch das Drehgelenk in der Querbewegung fixiert ist.

Die Zylinder 20, 21 dienen zur Stütze der Last vom Chassis 14, 16 auf die Achsen 17, 22, 23 und sind an Angriffspunkten 26 (nur am vorderen linken Zylinder dargestellt) mit dem Chassis oder den Achsen und sind üblicherweise über Gelenklager verbunden.

Die bodenseitigen Kammern der Zylinder jeder Seite sind miteinander hydraulisch verbunden, d.h. die Zylinder 20a-c und in einem davon getrennten hydraulischen Netzwerk auch die Zylinder 21a-c. Die Verbindungsleitung 27 eines Netzwerks ist für die linke Seite dargestellt, für die rechte verdeckt.

Anstatt einer drehbaren Lagerung 18 kann eine drehbare Lagerung auch durch eine alternative Chassiskonstruktion gewährleistet werden. Hierzu kann z.B. an der Position des Knickgelenks ein Drehkranz mit Drehachse gleich der Fahrzeuglängsachse eingebaut werden. D.h. die Drehbewegung wird durch das Chassis vollzogen, nicht mehr durch die Achse allein, die hier fest gegenüber dem ersten Chassisteil 14 montiert wäre.

Auch eine Anordnung mit Kugelgelenk und Lenkerabstützung zur Verringerung des Freiheitsgrades wären denkbar.

Die Drehachse des Kugelgelenks oder Drehkranzes müssen natürlich an der Position des Trägers 16 liegen, sondern beispielsweise auch darunter.

Im Falle einer alternativen Chassiskonstruktion müssen auch die Zylinder anders angeordnet werden um die rotatorische Bewegung des Gelenks durch ihre translatorische Beweglichkeit aufzunehmen.

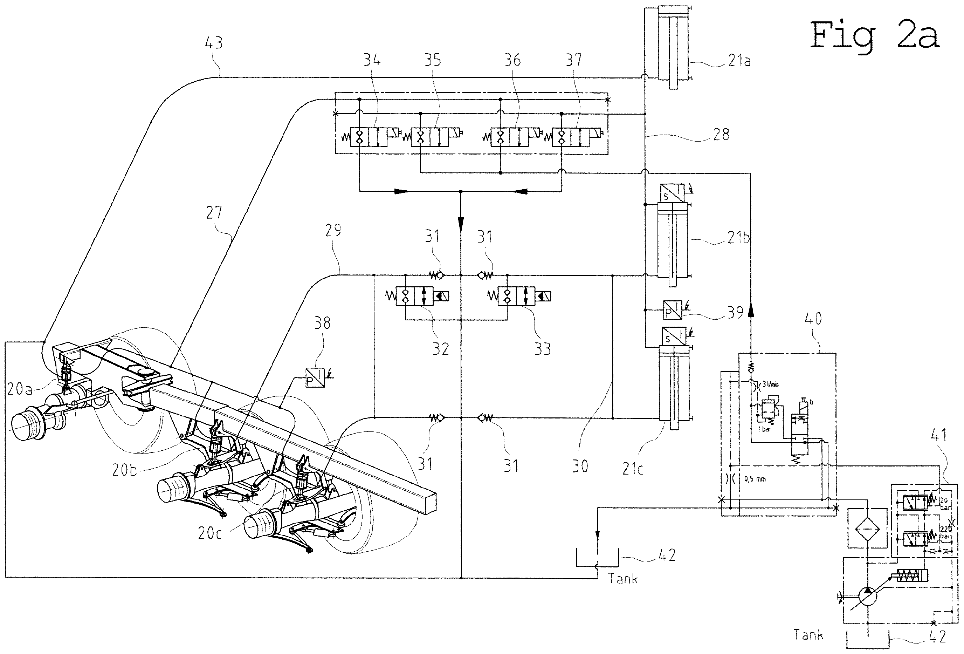

Figur 2a erklärt die Funktionsweise anhand eines Hydraulikschaltplanes. Die Anschlüsse der linken Seite sind, wie in Figur 1 räumlich dargestellt, die der rechten Seite schematisch.

Da die Hydraulikflüssigkeit quasi inkompressibel ist und die hydraulischen Netzwerke 27, 28, die durch die jeweiligen Leitungen 27, 28 verbunden sind, abgeschlossen sind, wird sich das Volumen der gespeicherten Hydraulikflüssigkeit nicht ändern. Wird nun durch Bodenunebenheiten der Bodendruck auf ein Rad 12a-c größer oder kleiner, so erfährt der betreffende Zylinder 20a-c an diesem Rad einen Hub, abhängig von Belastungsänderungen auf den anderen Rädern 12a-c. Sollte sich der Bodendruck auf allen Rädern gleich ändern, erfolgt natürlich kein Hub, sondern lediglich eine Druckveränderung im Netzwerk.

Ein Hub bewirkt jedenfalls eine Verschiebung der Hydraulikflüssigkeit im Netzwerk und bewirkt so ein Heben/Senken der anderen angeschlossenen Zylinder, bei gleichbleibenden Bodendruck der entsprechenden Räder. Dies bewirkt eine Lageangleichung des Chassis an die Bodenkontur. Wenn die Zylindergrößen entsprechend der Angriffspunkte und Geometrien eingestellt sind, wird eine gleichmäßige Lastverteilung erreicht, d.h. z.B. werden bei gleich großen Zylindern und gleichen Hebelverhältnissen 100 % des Hubes einer Bodenunebenheit zu etwa 66% einen inversen Hub (einfahren) dieses Zylinders bewirken, während sich etwa 33% Hub (ausfahren) bei den Zylindern der anderen Achsen (bei einem 3-Achser) einstellt.
Der Hub des Chassis richtet sich nach dem höchsten Hub. Dies betrifft alle Räder, im Gegensatz zum erwähnten Stand der Technik, bei dem eine Achse diesen Vorteil nicht besitzt und somit ein Überfahren einer Bodenunebenheit wenigstens beim Überfahren mit dieser einen Achse zu einem 100%igen Hub führen würde.
Da die Vorderachse 17 sich nicht vertikal translatorisch in der Höhe bewegen lässt, bewirkt ein Hub am Zylinder 20a, 21a, einen Gegenhub am anderen Zylinder 21a, 20a. Möglicherweise lässt sich dieser Effekt auch erreichen, wenn auf einer der Achsen ein anderer Freiheitsgrad (als der vertikal translatorische) eingeschränkt ist.
Beispiel: Das rechte Vorderrad 13a fährt auf eine Bodenwelle. Dies bewirkt eine Verringerung des Hubes des Zylinder 21a und führt zu einer Flüssigkeitsverschiebung im Netzwerk 28 und einer Erhöhung des Hubes der Zylinder 21b und 21c. D.h. dadurch, dass das Vorderrad 13a eingedrückt wird, werden die anderen Räder 13b und c herausgedrückt. Hätte die Vorderachse 17 die gleichen Freiheitsgrade wie die Hinterachsen 22, 23, würde die Last vollständig über die Zylinder getragen.Dann würde z.B. bei Montage des schweren Rodeaggregats, das auf der Vorderachse lastet, die Hydraulikflüssigkeit in die hinteren Zylinder gedrückt werden, auf deren Achsen gar kein Gegengewicht dazu vorhanden ist (bei leerem Bunker).
Durch die pendelnde Lagerung führt die Bodenwelle nun dazu, dass sich durch die starre Achse 17 das linke Rad 12a nach unten bewegt und auch eine Flüssigkeitsverschiebung im linken Netzwerk 27 bewirkt. Diese wiederum führt zu einer Reduzierung des Hubes auf der linken Seite der Räder 12b und c, also anders herum wie auf der rechten Seite.

Dies ist also die Gegenkraft, die das Fahrzeug definiert in der gewünschten Lage hält. Kolbenstangenseitig sind die Zylinder 20b, c und 21b, c der Hinterachsen 22, 23 miteinander über die Leitung 29 (links) und 30 (rechts) in einem jeweiligen Netzwerk verbunden. Über Rückschlagventile 31 kann Hydraulikflüssigkeit aus dem Tank in das Netzwerk aber nicht zurück fließen. Der Rückflusspfad läuft über Schaltventile 32 (links) und 33 (rechts), die im normalen Betriebszustand offen sind.
Die Ventile sind im Normalzustand bestromt und daher in der Figur geschlossen gezeichnet. Die Bestromung dient der Sicherheit, damit die Kippsicherung bei Stromausfall aktiv wird. Falls das Fahrzeug zu kippen droht, kann das Ventil der Gegenseite zu der das Fahrzeug kippt, geschlossen werden, wodurch die Kolben dieser Zylinder nicht weiter ausfahren und das kippende Moment auch die Gewichtskraft der Räder auf der Gegenseite überwinden muss, sowie die Verschiebung des Kippdrehpunkts in Richtung der Räder der Kippseite. Die kolbenstangenseitige Verbindung der Zylinder 20b, c und 21b, c kann notwendig sein, damit die Wankkorrektur noch funktioniert. Sonst wäre der Zylinder komplett gesperrt.
An der pendelnd gelagerten Achse ist diese Maßnahme nicht notwendig, hier erfüllt die sichernde Wirkung bereits der bodenseitige Druck im Zylinder auf der anderen Seite. Daher genügt es, die kolbenstangenseitigen Kammern dieser Zylinder 20a, 21a über eine Leitung 43 an einen Tank anzuschließen. Dabei sollte beachtet werden, dass der Anschluss an Tanks generell so gestaltet ist, dass über den Tankanschluss keine Luft angesaugt wird.
Die Steuerung erfolgt gewöhnlich elektronisch automatisch. Dazu wird das Signal der Drucksensoren 38 (links) und 39 (rechts) ausgewertet. Über diese lässt sich ein kritischer Druckabfall bemerken, der anzeigt, dass ein ungewolltes oder vollständiges Ausfahren der Zylinder 20 oder 21) möglich ist oder gerade geschieht. Wird dies festgestellt, wird das Ventil 32 oder 33 geschlossen.
Dazu können auch die Messsysteme, die insbesondere in den Zylindern der frei beweglichen Achsen verbaut sein sollten, dienen (über den jeweiligen Zylindern gezeichnet). Diese können die Position des Kolbens und den Hub feststellen. Damit natürlich auch, ob ein Kolben Gefahr läuft in den Anschlag zu laufen und dadurch ggf. auch die Kippsicherung zu aktivieren. Insbesondere können die Informationen dieser Sensoren verwendet werden, die Höhe und den Neigungswinkel des Fahrzeugs günstig zu beeinflussen.

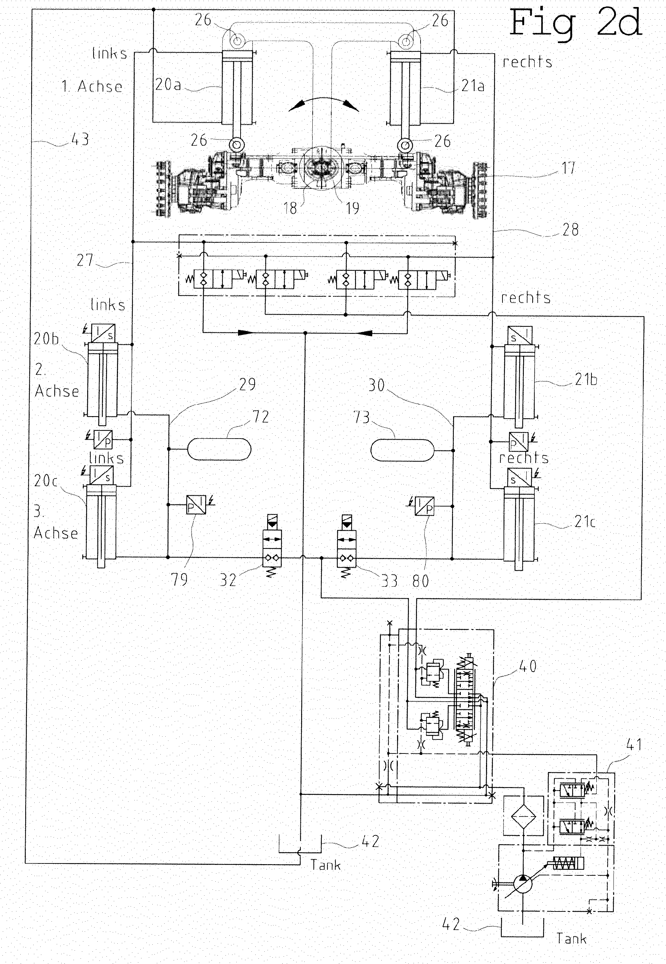

An den kolbenstangenseitigen Netzwerken 29, 30, könnten auch Druckspeicher wie in Figur 2d angeschlossen sein.Es existieren weitere vier Ventile die dazu dienen das Volumen der Hydraulikflüssigkeit in den Netzwerken 27 und 28 zu heben oder zu senken. Die Standardeinstellung dieser Ventile ist geschlossen. Die Ventile zum Erhöhen des Volumens (36 für links, 35 für rechts) sind im offenen Zustand an eine Druckquelle angeschlossen. Die Ventile zum Senken des Volumens (34 für links und 37 für rechts) sind an den Tank angeschlossen.

Über die Erhöhung oder Senkung des Volumens jeder Seite kann die Höhe des Fahrzeugs über dem Boden (Bodenfreiheit) oder die seitliche Neigung (Neigungswinkel) eingestellt werden.

Der Vollständigkeit halber sei noch das Hauptventil 40, die Pumpe 41 und der Tank 42 erwähnt.

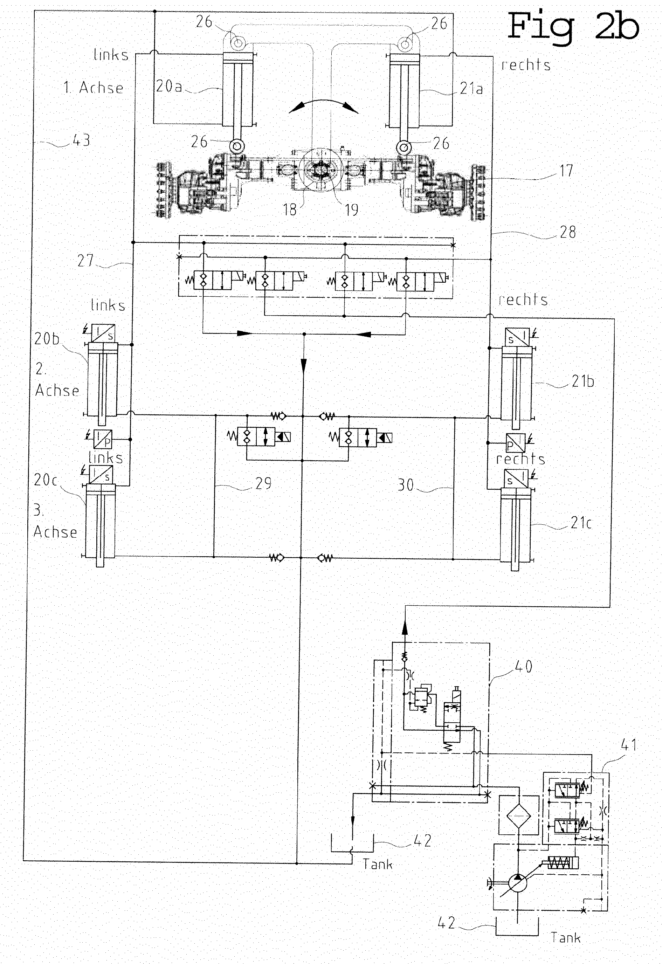

Figur 2b zeigt eine ähnliche Darstellung wie Figur 2a, wobei die räumliche Ansicht des Fahrgestells zugunsten der Darstellung der hydraulischen Komponenten in einem Hydraulikschaltplan weggelassen wurde.

Zusätzlich ist die pendelnd aufgehängte Achse 17 mit ihrem Drehgelenk 18, der durch sie hindurch gehenden Längsachse des Fahrzeugs 19 und der Angriffspunkte 26 der Zylinder 20a und 21a zu sehen. Der Doppelpfeil deutet die Bewegungsmöglichkeit des Drehgelenks 18 an und gibt einen Eindruck, wie sich das Fahrgestell neigen kann und wie sich die Zylinder dazu bewegen.

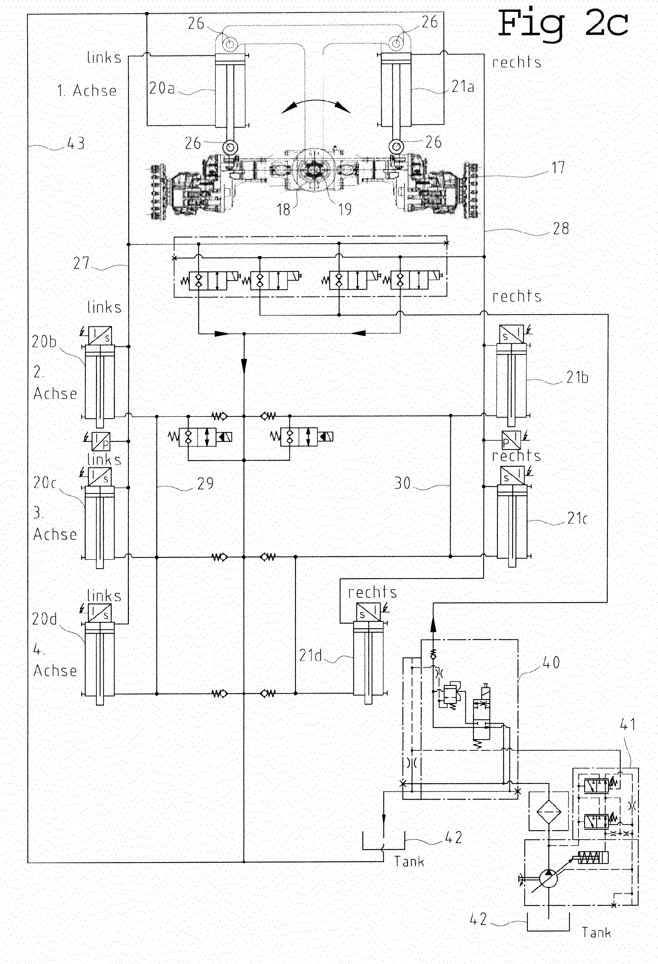

Figur 2c zeigt eine Darstellung wie in Figur 2b, allerdings mit dem Hydraulikschaltplan für ein Fahrzeug mit vier Achsen.

Die Zylinder der 4. Achse (20d, 21d) werden analog zu den Zylindern der anderen Hinterachsen (20b, c; 21b, c) angeschlossen, d.h. die Bodenseiten und Kolbenstangenseiten miteinander verbunden. Die 4. Achse besitzt dabei üblicherweise auch die gleichen Freiheitsgrade, wie die anderen Hinterachsen (22, 23).

Figur 2d zeigt eine Darstellung wie in Figur 2b, allerdings mit einer andersartigen Kippsicherung per permanent vorhandener Vorspannung der Kolbenstangenseiten.
Diese wird dadurch erreicht, dass jede Fahrzeugseite im kolbenstangenseitigen Netzwerk 29, 30 je einen Druckspeicher 72, 73 enthält. Dieser kann Volumenschwankungen im kolbenstangenseitigen Netzwerk abpuffern und Verspannungen vermeiden. Die Drucksensoren 79, 80 überwachen den Druck. Mittels der Ventile 32, 33 kann der Druck für jede Seite separat abgelassen bzw. bei gleichzeitiger Ansteuerung des Hauptventils 40 mit Schaltung in die entsprechende Richtung Druck aufgebaut werden. Solange der Druck in den Netzwerken 29, 30 dadurch gleich hoch gehalten wird, führt dies zu keiner Auswirkung auf die korrekte Verteilung der Last mittels der bodenseitigen Netzwerke 27, 28 und diese Maßnahme hat keine Nachteile auf die korrekte Funktion des Wankausgleichs.
Auch um ein ungewolltes Ausziehen der Zylinder auf der hangzugewandten bzw. kurveninneren Seite zu vermeiden, könnten die kolbenstangenseitigen Netzwerke 29, 30 jeweils an einen Druckspeicher 72, 73 angeschlossen werden. Der Druck sollte dann im Netzwerk 29 bzw. 30 gleich hoch eingeregelt werden, so dass sich alle kolbenstangenseitigen Kräfte der linken und rechten Seite gegeneinander aufheben und trotzdem der Druck in den Kolbenstangenseiten als Kippsicherung wirkt.
Der Druckspeicher sollte immer vorhanden sein, sobald die Ventile der Kippsicherung 32 bzw. 33 absperren, da sich das Volumen in den kolbenstangenseitigen Netzwerken beim Arbeiten des Wankausgleichs, wenn Ventil 32 bzw. 33 gesperrt ist, trotzdem verändern kann.

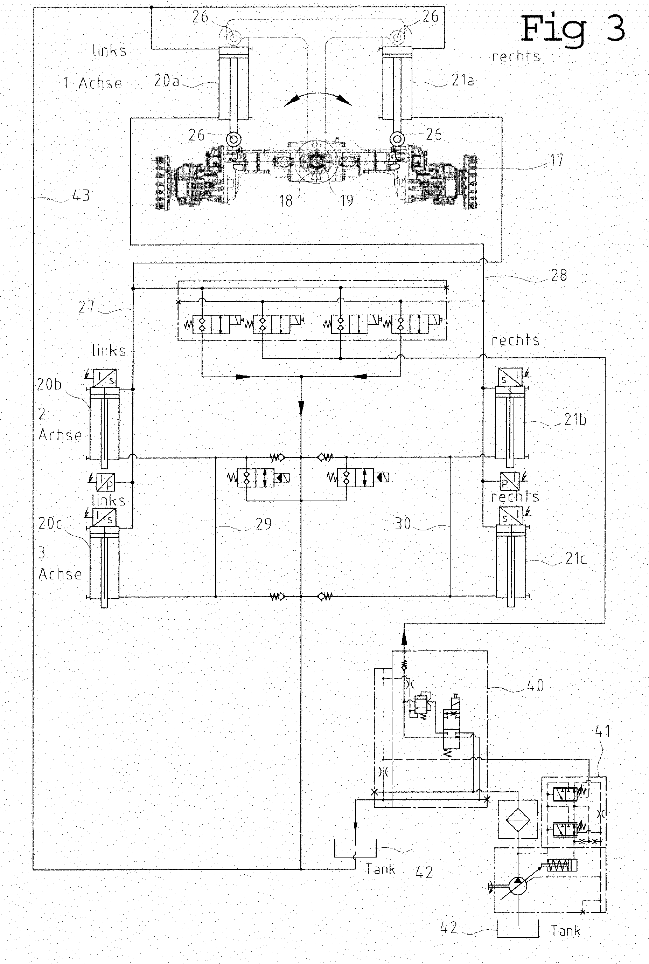

Figur 3 zeigt einen hydraulischen Schaltplan für die seitengetrennte hydraulische Verbindung mit einem kreuzweise kolbenstangenseitigen Anschluss mit einer überkreuzten hydraulischen Verbindung der zwei Netzwerke 27 und 28.
Dies ist eine alternative Verschaltung zu den Figuren 2a und 2b. Dabei sind die Zylinder 20a und 21a die an der pendelnd aufgehängte Achse 17 mit ihrem Drehgelenk 18, der durch sie hindurch gehenden Längsachse des Fahrzeugs 19 an dem Angriffspunkte 26 befestigte sind, über Kreuz angeschlossen. Die linke Leitung 27 ist bodenseitig an die hinteren linken Zylinder 20b und 20c angeschlossen, vorne aber auf der rechten Seite kolbenstangenseitig an den Zylinder 21a. Umgekehrt ist die rechte Leitung 28 bodenseitig an die hinteren rechten Zylinder 21b und 21c angeschlossen, vorne aber auf der linken Seite kolbenstangenseitig an den Zylinder 20a.

Analog ist hier jedoch die Bodenseite dieser Zylinder 20a und 21a über die Verbindung 43 an den Tank angeschlossen.

Dies hat die gleiche Wirkung wie eine gleichseitige Verschaltung, da eine Vergrößerung des Hubs eines Zylinders die gleiche Wirkung (Neigung der Achse) hat, wie eine Verkleinerung des Hubs des Zylinders auf der anderen Seite des Drehgelenks.

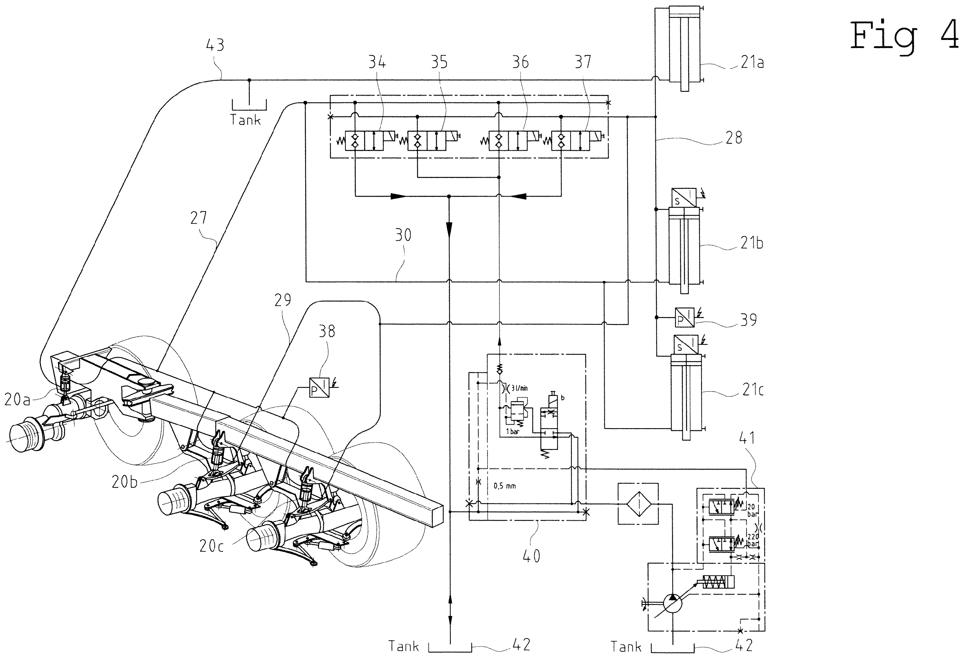

Figur 4 zeigt eine Kreuzschaltung des längsseitigen Wankausgleichs (wie in den vorigen Figuren gezeigt), in Kombination mit einem querseitigen Wankausgleich. Hierzu wird das linke Netzwerk 27 der hydraulisch bodenseitig verbundenen Zylinder 20 mit dem Netzwerk 30 der rechten Seite und der kolbenstangenseitig verbundenen Zylinder verbunden. Diese bilden damit ein gemeinsames Netzwerk.

Gleiches gilt für das rechte bodenseitig angeschlossene Netzwerk 28, das mit dem linken kolbenstangenseitigen angeschlossenen Netzwerk 29 verbunden wird.

Für diesen Fall ist eine Kippsicherung über die Ventile 32, 33 nicht notwendig, da der Gegendruck, der durch das Sperren dieser nun fehlenden Ventile aufgebaut wurde, durch die von der Bodenseite der anderen Fahrzeugseite zurück fließende Hydraulikflüssigkeit aufgebaut wird.

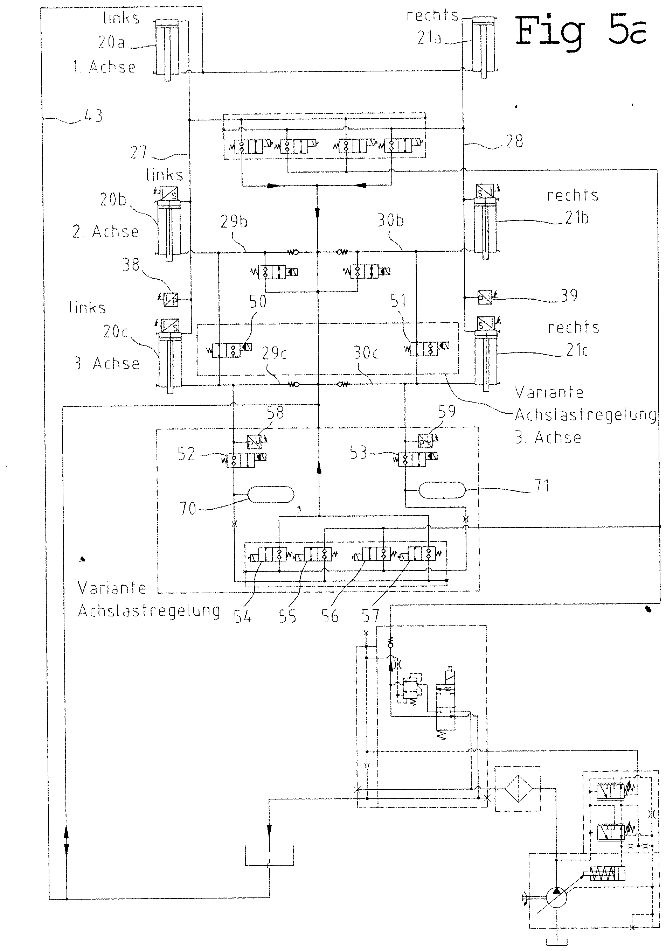

Figur 5a zeigt den hydraulischen Schaltplan einer zusätzlichen Achslastregelung für die 3. Achse.

Bei dieser ist es möglich, die Kraft der Zylinder 20c, 21c der 3. Achse zu reduzieren, in dem kolbenstangenseitig Druck aufgebaut wird. Mit dem Gegendruck von unten wird die Wirkung des auf den Kolbenboden wirkenden Drucks reduziert und somit das von der Achse auf den Boden übertragene Gewicht beeinflusst, mit der Wirkung, dass mehr Gewicht auf der 2. Achse lastet. Durch den Hebeleffekt, wird die 1. Achse dabei automatisch auch entlastet. Die 2. Achse wirkt als Drehpunkt dieses Hebels, dem nun eine geringere Gegenkraft an der 3. Achse entgegengesetzt wird, so dass ein Teil der Last die auf die Achsen 1 und 3 gewirkt hat, auf der 2. zum Ruhen kommt.

Um die Wankstabilisierung zu erhalten, muss die Regelung rechts und links getrennt erfolgen, d.h. die Kolbenstangenseiten beider Seiten dürfen nicht verbunden sein.

Gemäß dem Schaltplan kann dies für die rechte und linke Seite unabhängig durchgeführt werden. Im Fall der Aktivierung der Achslastregelung, bei der die 3. Achse entlastet wird, werden die Ventile 50, 51 gesperrt, so dass die kolbenstangenseitigen Verbindungen der Zylinder 20b, c oder 21b, c getrennt werden. Die Leitung 29, bzw. 30 besteht dann aus zwei Teilen 29b, 30b (für die 2. Achse) und 29c, 30c (für die 3. Achse).

Der Ist-Druck im kolbenstangenseitigen Teil der Zylinder der 3. Achse (auch im Speicher 70, 71, falls die Ventile 52, 53 offen sind) kann über die Drucksensoren 58 und 59 bestimmt werden. Mit diesen Informationen kann z.B. auf den Soll-Druck eingeregelt werden.

Das Aufschalten der Entlastungsenergie durch die Speicher 70, 71 auf die Kolbenstangenseite geschieht über die Ventile 52, 53. Im Dauerbetrieb soll der Speicher getrennt werden können, damit z.B. die Kippsicherung aktiv sein kann.

Der gewünschte Entlastungsdruck kann durch die Druckdifferenz der Drucksensoren bodenseitig (38, 39) zu den kolbenstangenseitigen (58, 59) geregelt werden.

Folgende Varianten gelten auch für eine Druckerhöhung/--senkung im Speicher 70, 71, anstatt der Kolbenstangenseite.

Für eine kolbenstangenseitige Druck-/Volumenerhöhung im linken Zylinder 20c wird das Ventil 55 geöffnet und so eine Verbindung der hydraulischen Leitung 29c zur Druckquelle hergestellt.

Für eine kolbenstangenseitige Druck-/Volumenerhöhung im rechten Zylinder 21c wird das Ventil 56 geöffnet und so eine Verbindung der hydraulischen Leitung 30c zur Druckquelle hergestellt.

Für eine kolbenstangenseitige Druck-/Volumensenkung im linken Zylinder 20c wird das Ventil 57 geöffnet und so eine Verbindung der hydraulischen Leitung 29c zum Tank hergestellt.

Für eine kolbenstangenseitige Druck-/Volumensenkung im rechten Zylinder 21c wird das Ventil 54 geöffnet und so eine Verbindung der hydraulischen Leitung 30c zum Tank hergestellt.

Die Möglichkeit zur Druck-/Volumensenkung kann notwendig sein, um den Druck der getrennten Netzwerke 29b und c, sowie 30b und c wieder anzugleichen, bevor diese wieder verbunden werden, damit die Funktionalität für den Wankausgleich wieder hergestellt werden kann, da ein unabgeglichenes Zusammenschalten einen Hubsprung der Zylinder verursachen und dem Fahrzeug einen unerwünschten Ruck geben würde.

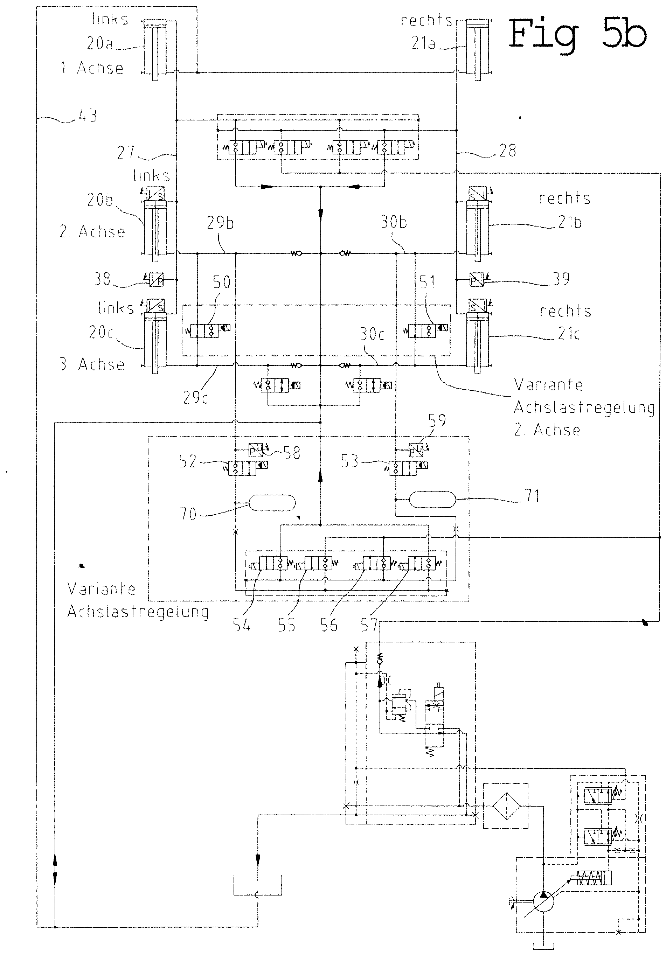

Figur 5b zeigt den hydraulischen Schaltplan einer zusätzlichen Achslastregelung für die 2. Achse.

Diese Beschreibung ist analog zu Figur 5a.

Hier ist es möglich, den Hub der Zylinder 20b, 21b der 2. Achse zu reduzieren, indem kolbenstangenseitig Druck aufgebaut wird. Das zieht die Achse näher zum Chassis mit der Wirkung, dass mehr Gewicht auf der 3. Achse zum tragen kommt. Durch den Hebeleffekt, wird die 1. Achse dabei automatisch mit belastet. Die 2. Achse wirkt als Drehpunkt dieses Hebels, dem nun eine größere Gegenkraft an der 3. Achse entgegenwirken muss, so dass ein Teil der Last die auf die 2. Achse gewirkt hat, auf den Achsen 1 und 3 zum Ruhen kommt.

Der Ist-Druck im kolbenstangenseitigen Teil der Zylinder der 2. Achse kann über die Drucksensoren 58 und 59 bestimmt werden. Mit diesen Informationen kann z.B. auf den Soll-Druck eingeregelt werden.

Für eine kolbenstangenseitige Druck-/Volumenerhöhung im linken Zylinder 20b wird das Ventil 55 geöffnet und so eine Verbindung der hydraulischen Leitung 29b zur Druckquelle hergestellt.

Für eine kolbenstangenseitige Druck-/Volumenerhöhung im rechten Zylinder 21b wird das Ventil 56 geöffnet und so eine Verbindung der hydraulischen Leitung 30b zur Druckquelle hergestellt.

Für eine kolbenstangenseitige Druck-/Volumensenkung im linken Zylinder 20b wird das Ventil 57 geöffnet und so eine Verbindung der hydraulischen Leitung 29b zum Tank hergestellt.

Für eine kolbenstangenseitige Druck-/Volumensenkung im rechten Zylinder 21b wird das Ventil 54 geöffnet und so eine Verbindung der hydraulischen Leitung 30b zum Tank hergestellt.

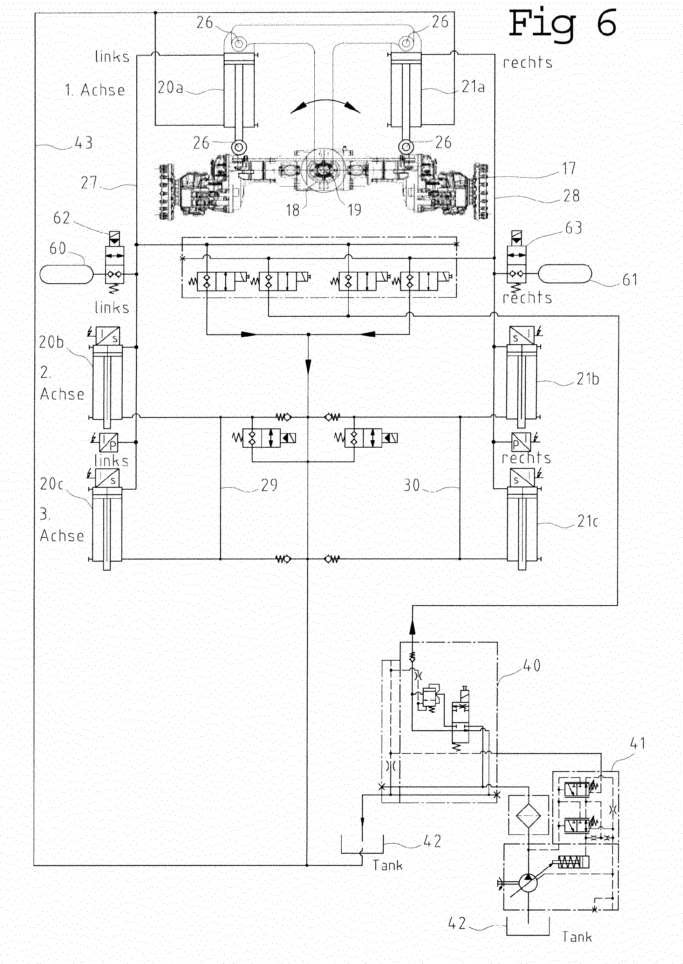

Figur 6 zeigt noch die Möglichkeit wie eine Federung in das vorgeschlagene System eingebaut werden kann.

Dazu werden hydraulische Druckspeicher an die Netzwerke 27, 28 angeschlossen. Eine Druckänderung wird nun temporär vom Druckspeicher, das als ein hydraulisches Federungselement ausgebildet sein kann, aufgenommen und wieder abgegeben. Diese reaktive Eigenschaft führt zu einem Federungseffekt.

Der Druckspeicher kann hydropneumatisch funktionieren. Üblicherweise wird hierzu die Hydraulikleitung über einen Membran mit einem Stickstoffspeicher verbunden. Dieser ist im Volumen veränderlich und bewirkt die Federungsfunktion.

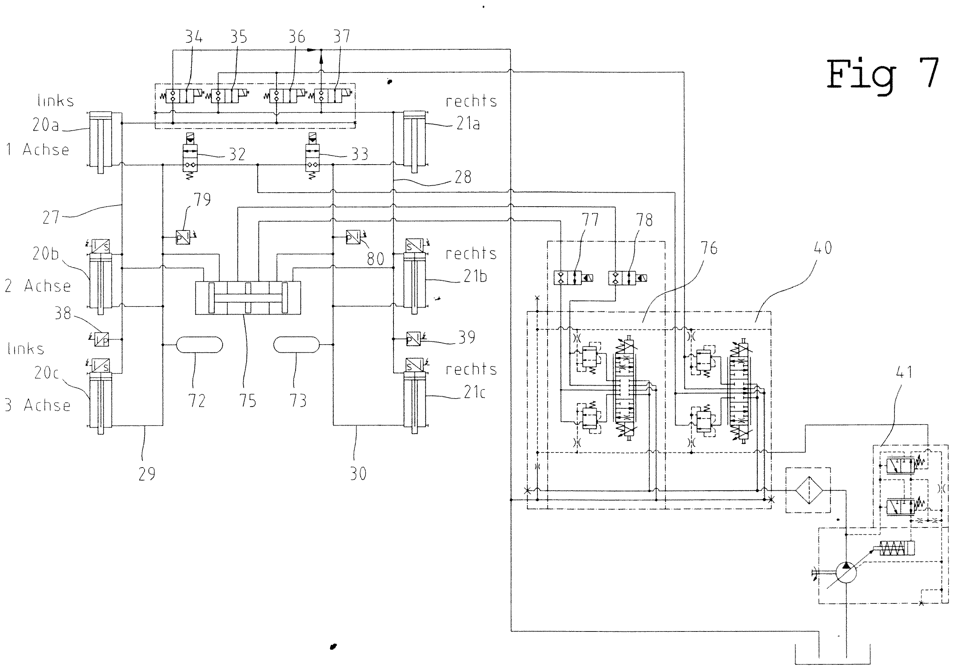

Figur 7 zeigt einen hydraulischen Schaltplan mit einer Neigevorrichtung bei Volumenverschiebung.

Gezeigt ist einerseits die bereits in anderen Figuren gezeigte Höhenverstellung über die Ventile 34, 35, 36, 37 getrieben vom Hauptventil 40.

Für die Neigungssteuerung ist eine Geber-/Nehmerzylindereinheit 75 vorgesehen. Es kann auch eine Anordnung mehrerer gekoppelter Zylinder verwendet werden. Eine Volumenänderung für die Hydraulikflüssigkeit in einem Netzwerk einer Seite, das bodenseitig angeschlossen ist 27, 28 soll auch eine Volumenänderung in demselben Netzwerk der anderen Seite, das bodenseitig angeschlossen ist 28, 27 bewirken. So könnte bei einer Aktivierung der Neigungsregelung in der Ausgangslage, d.h. durchschnittlich halb ausgefahrene Zylinder links 20a-c, durchschnittlich halb ausgefahrene Zylinder rechts 21a-c und zugleich Geber-/Nehmerzylindereinheit in Mittellage, ohne ständige Verrechnung der Position der einzelnen Zylinder das Chassis sehr schön gleichmäßig und synchron von links nach rechts und umgekehrt geneigt werden, da absolut zeitgleich die identischen Volumen dem einen Netzwerk 27, 28 entnommen und dem anderen Netzwerk 28, 27 zugeführt werden und umgekehrt.

Es ist auf diese Art und Weise sowohl die Entnahme und Zufuhr von Volumen (bzw. Hydraulikflüssigkeit) nur in den linken bzw. rechten bodenseitigen Netzwerken darstellbar (Geber-/Nehmerzylindereinheit benötigt vier gekoppelte variable Volumenkammern) als auch in einer Variante in den linken bzw. rechten bodenseitigen Netzwerken und zusätzlich in den linken bzw. rechten kolbenstangenseitigen Netzwerken zugleich (Geber-/Nehmerzylindereinheit benötigt 6 gekoppelte variable Volumenkammern).

Die Verrechnung der Position könnte ansonsten eine elektronische Regelung durchführen und die Einstellung der richtigen Druck- und Volumenverhältnisse durch aktives Schalten einer Druckquelle durchgeführt werden.

So bewirkt eine Bewegung der Zylindereinheit 75 nach links ein Verschieben der Menge der Hydraulikflüssigkeit aus der Zylindereinheit 75 in das bodenseitige Netzwerk 27 der linken Seite, was zum Ausfahren der Zylinder 20a-c führt und einer Hebung des Chassis an der linken Seite. Gleichzeitig wird aus dem bodenseitigen Netzwerk rechts 28 Hydraulikflüssigkeit in die Zylindereinheit 75 bewegt und das Chassis senkt sich auf der rechten Seite ab. Durch diese volumengleiche Verschiebung sind die durchschnittlichen Wege, die sich die linken Zylinder 20 a-c und die rechten Zylinder 21a-c bewegen invers gleich.

Durch die Kopplung der Zylindereinheit 75 wird gleichzeitig auf der rechten Seite des Fahrzeugs Hydraulikflüssigkeit in das kolbenstangenseitige Netzwerk 30 hinein gedrückt, dieselbe Menge aus dem kolbenstangenseitigen Netzwerk 29 entnommen.

Bewegt sich die Zylindereinheit 75 nach rechts, so geschieht das gleiche Prinzip, entsprechend umgekehrt, das Fahrzeug wird nach links geneigt.

Die Zylindereinheit 75 kann über seine mittigen Anschlüsse gesteuert werden. Dies geschieht über eine Ventilscheibe 76 mit der diese Anschlüsse verbunden sind. Die Ventilscheibe ist ein Dreifachventil mit den drei Stellungen: Verschieben der Zylindereinheit 75 nach links, nach rechts und keine Verschiebung. Zusätzlich existieren auf dieser Verbindung Sicherheitsventile für jede Seite 77, 78, die dauerbestromt sind, so dass im Falle eines Stromausfalls, z.B. durch einen Fehler im Fahrzeug, die Neigungssteuerung blockiert/verhindert werden kann.

Es existieren zwei Druckspeicher 72, 73, die eine Volumenkompensations-Funktion übernehmen, so wie die Speicher 70, 71 aus den anderen Figuren. Ggf. können auch die Speicher 70, 71 die Funktion der Speicher 72, 73 übernehmen.

Es existieren je ein Drucksensor 79 bzw. 80 für jede Seite, die ggf. auch mit vorhandenen Sensoren 58, 59 identisch sein können. Mit den Sensoren kann die Vorspannung des Druckes auf den kolbenstangenseitigen Flächen der Stützzylinder 20, 21 überwacht bzw. eingeregelt werden.

Durch Bestromen der Sitzventile 32 bzw. 33 bei gleichzeitigem nicht Ansteuern oder Ansteuern von Hauptventil 40 in die eine Richtung (Verbindung von Ventilen 32, 33 zum Rücklauf muss hergestellt sein) kann Druck im kolbenstangenseitigen Netzwerk abgebaut werden. Das Hauptventil gibt die Sitzventile 32 und 33 im unbestromten Zustand und auch bei Auslenkung in die eine Richtung zum Rücklauf hin frei. Wenn das Hauptventil in die andere Richtung ausgelenkt wird, dann kommt Hydraulikflüssigkeit von der Pumpe zu den Sitzventilen 32, 33.

Durch Bestromen der Sitzventile 32 bzw. 33 bei gleichzeitigem Ansteuern von Hauptventil 40 in die andere Richtung kann Druck im kolbenstangenseitigen Netzwerk aufgebaut werden.

Das Messsystem in der Zylindereinheit 75 dient zur Sicherstellung der korrekten Startposition (alle Zylinder des Fahrwerks und Geber-/Nehmerzylindereinheit in Mittelstellung) beim Aktivieren des Neigungsausgleichs. Es könnten aber damit auch eventuelle Leckagen zwischen den einzelnen Netzwerken im Betrieb erkannt und ausgeglichen werden.

Praxisnah und kostengünstig wäre der Einsatz der Geber-/Nehmerzylindereinheit 75 mit nur vier gekoppelten variablen Volumenkammern nur in den bodenseitigen Netzwerken 27, 28. Um ein ungewolltes Ausziehen der Zylinder auf der hangzugewandten bzw. kurveninneren Seite zu vermeiden, könnten die kolbenstangenseitigen Netzwerke 29, 30 auch gekoppelt und gemeinsam an einen Druckspeicher 72, 73 angeschlossen werden, so dass sich alle kolbenstangenseitigen Kräfte der linken und rechten Seite gegeneinander aufheben und trotzdem der Druck in den Kolbenstangenseiten als Kippsicherung wirken kann.

Der Druckspeicher sollte vorhanden sein, da sich das Volumen in den Kolbenstangenseiten beim Arbeiten der Wankausgleichsfunktion verändern kann.

## Patentansprüche

1. Selbstfahrende Erntemaschine, mit einer linken und rechten Seite des Fahrzeugs, mit einem Chassis (11) bzw. Karosserie, mit mindestens drei Achsen (17, 22, 23), welche geeignet sind für die Aufnahme von Rädern (12, 13) bzw. dergleichen Rollvorrichtungen, wobei diese mindestens drei Achsen oder deren Achsaufhängung über Hebevorrichtungen (20) am Chassis abgestützt oder aufgehängt sind, und wenigstens eine Hebevorrichtung (20a) jeder Achse mit wenigstens einer Hebevorrichtung (20b, c) jeder anderen der mindestens drei Achsen in Verbindung (27) steht, derart, dass die Verbindung geeignet ist, die Last, die auf die Räder einer Seite (13a, b, c) des Fahrzeugs wirkt, auf alle Räder derselben Fahrzeugseite (13a, b, c) zu verteilen, wobei die Hebevorrichtung ein hydraulischer Zylinder ist, der eine bodenseitige und kolbenstangenseitige Kammer besitzt und wobei die Verbindung (27) hydraulisch ausgebildet ist und mit den miteinander verbundenen Zylindern (20) ein hydraulisches Netzwerk (20;27) bildet, wobei ein Volumen an Hydraulikflüssigkeit in dem Netzwerk änderbar ist und das Volumen an Hydraulikflüssigkeit in dem bodenseitig verbundenen Netzwerk auf einer Seite (27, 28) um die Menge reduziert werden kann, wie sie im bodenseitigen Netzwerk (28, 27) der anderen Seite erhöht wird und umgekehrt

2. Selbstfahrende Erntemaschine nach Anspruch 1, **dadurch gekennzeichnet, dass** die wenigstens eine Achse (17) mindestens einen Freiheitsgrad weniger besitzt, als wenigstens eine der beiden anderen Achsen (22, 23).

3. Selbstfahrende Erntemaschine nach Anspruch 2, **dadurch gekennzeichnet, dass** die wenigstens eine Achse (17), die einen Freiheitsgrad weniger besitzt, keine vertikale Translationsbewegung gegenüber dem Teil des Chassis (16) ausführen kann, an dem die wenigstens eine andere Achse (22, 23) abgestützt oder aufgehängt ist.

4. Selbstfahrende Erntemaschine nach einem der Ansprüche 2 oder 3, **dadurch gekennzeichnet, dass** die Achse (17), die einen Freiheitsgrad weniger besitzt, pendelnd gelagert (18) ist.

5. Selbstfahrende Erntemaschine nach einem der Ansprüche 2 bis 4, **dadurch gekennzeichnet, dass** die Achse, die einen Freiheitsgrad weniger besitzt (17) an einem Teil 14 des Chassis 11 befestigt ist, der über ein Kugelgelenk oder einen Drehkranz mit einem anderen Teil 16 des Chassis verbunden ist, mit dem die wenigstens eine andere Achse (22, 23) abgestützt oder aufgehängt ist.

6. Selbstfahrende Erntemaschine nach einem der Ansprüche 2 - 5, **dadurch gekennzeichnet, dass** die Zylinder (20, 21) und deren Angriffspunkte (26) so ausgelegt sind, dass der Kontaktflächendruck aller Räder (13) einer Seite auf den Boden gleichmäßig werden kann.

7. Selbstfahrende Erntemaschine nach einem der Ansprüche 2 - 6, **dadurch gekennzeichnet, dass** jede Achse durch einen linken (20) und einen rechten Zylinder (21) abgestützt oder aufgehängt ist und die Zylinder über zwei getrennte hydraulische Netzwerke (27, 28) seitenweise verbunden sind, wobei alle Zylinder einer Seite untereinander mit der bodenseitigen Kammer hydraulisch miteinander verbunden sind.

8. Selbstfahrende Erntemaschine nach einem der Ansprüche 2 - 6, **dadurch gekennzeichnet, dass** jede Achse durch einen linken (20) und einen rechten Zylinder (21) abgestützt oder aufgehängt ist und die Zylinder über zwei getrennte hydraulische Netzwerke (27,28) verbunden sind, wobei die kolbenstangenseitige Kammer des Zylinders (20a, 21a) einer Seite der wenigstens einen Achse (17), die einen Freiheitsgrad weniger besitzt, mit den bodenseitigen Kammern der Zylinder (20b, c; 21b, c) der anderen Seite der wenigstens einen anderen Achse (22, 23) verbunden ist.

9. Selbstfahrende Erntemaschine nach einem der Ansprüche 7 oder 8, **dadurch gekennzeichnet, dass** die Zylinder in dem Netzwerk auf einer Seite (20) mit der bodenseitigen Kammer hydraulisch mit allen kolbenstangenseitigen Kammern der Zylinder auf der anderen Seite (21), die sich an den wenigstens zwei Achsen (22, 23) befinden, die vertikal translatorisch beweglich sind, verbunden sind.

10. Selbstfahrende Erntemaschine nach einem der Ansprüche 2 - 9, **dadurch gekennzeichnet, dass** eine Hydraulikflüssigkeit in einem weiteren Netzwerk (29, 30) mit wenigstens einer angeschlossenen kolbenstangenseitigen Kammer wenigstens eines der bodenseitig hydraulisch verbundenen Zylinder eines Netzwerks (27, 28) nicht mehr aus dem weiteren Netzwerk entweichen kann.

11. Selbstfahrende Erntemaschine nach einem der Ansprüche 2 - 10, **dadurch gekennzeichnet, dass** eine Druckdifferenz zwischen wenigstens zwei kolbenstangenseitigen Kammern derjenigen bodenseitig hydraulisch verbundener Zylinder (20b, c; 21b, c) eines Netzwerks hergestellt werden kann, deren Zylinder sich an wenigstens zwei Achsen (22, 23) befinden, die vertikal translatorisch beweglich sind.

12. Selbstfahrende Erntemaschine nach einem der Ansprüche 2 - 11, **dadurch gekennzeichnet, dass** wenigstens ein Speicher an wenigstens einem der hydraulischen Netzwerke angeschlossen ist.

13. Verfahren zur Verteilung einer Last über alle Achsen einer Fahrzeugseite, bei einer selbstfahrenden Erntemaschine nach Anspruch 1, mit einer linken und rechten Fahrzeugseite, mit einem Chassis (11) oder Karosserie, mit mindestens drei Achsen (17, 22, 23), welche geeignet sind für die Aufnahme von Rädern (12, 13) bzw. dergleichen Rollvorrichtungen, wobei diese mindestens drei Achsen oder deren Achsaufhängung über Hebevorrichtungen (20) am Chassis abgestützt oder aufgehängt sind und wenigstens eine Hebevorrichtung (20a) jeder Achse mit wenigstens einer Hebevorrichtung (20b, c) jeder anderen der mindestens drei Achsen in Verbindung (27) steht, derart, dass die Verbindung geeignet ist, die Last, die auf die Räder einer Seite (13a, b, c) des Fahrzeugs wirkt, auf alle Räder derselben Fahrzeugseite (13a, b, c) zu verteilen.

## Claims

1. A self-propelled harvester with a left and a right side of the vehicle, with a chassis (11) or body, with at least three axles (17, 22, 23) which are suited for receiving wheels (12, 13) or similar rolling devices, wherein these at least three axles or the axle suspension thereof are supported or suspended on the chassis via lifting devices (20), and at least one lifting device (20a) of each axle has a connection (27) to at least one lifting device (20b, c) of each other of the at least three axles such that the connection is suitable to distribute the load acting on the wheels of one side (13a, b, c) of the vehicle to all wheels of the same vehicle side (13a, b, c), wherein the lifting device is a hydraulic cylinder having a bottom-side and a piston-rod-side chamber, and wherein the connection (27) is configured hydraulically and together with the interconnected cylinders (20) forms a hydraulic network (20; 27), wherein a volume of hydraulic fluid in the network is changeable and the volume of hydraulic fluid in the network connected on the bottom side can be reduced on one side (27, 28) by the amount as it is increased in the network on the bottom side (28, 27) of the other side and vice versa.

2. The self-propelled harvester according to claim 1, **characterized in** the at least one axle (17) has at least one degree of freedom less than at least one of the two other axles (22, 23).

3. The self-propelled harvester according to claim 2, **characterized in that** the at least one axle (17) that has one degree of freedom less is not able to carry out a translatory motion with respect to the part of the chassis (16) on which the at least one axle (22, 23) is supported or suspended.

4. The self-propelled harvester according to any one of claim 2 or 3, **characterized in that** the axle (17) that has one degree of freedom less is pivotably mounted (18).

5. The self-propelled harvester according to any one of claims 2 to 4, **characterized in that** the axle that has one degree of freedom less (17) is fastened on a part (14) of the chassis (11) which is connected via a ball joint or a slewing ring to another part (16) of the chassis by means of which the at least one other axle (22, 23) is supported or suspended.

6. The self-propelled harvester according to any one of claims 2 - 5, **characterized in that** the cylinders (20, 21) and the engagement points (26) are designed such that the contact surface pressure of all wheels (13) of one side can become uniform on the ground.

7. The self-propelled harvester according to any one of claims 2 - 6, **characterized in that** each axle is supported or suspended by a left (20) and a right cylinder (21) and the cylinders are connected sidewise via two separate hydraulic networks (27, 28), wherein all cylinders of one side are interconnected and hydraulically connected to one another with the bottom-side chamber.

8. The self-propelled harvester according to any one of claims 2 - 6, **characterized in that** each axle is supported or suspended by a left (20) and a right cylinder (21) and the cylinders are connected via two separate hydraulic networks (27, 28), wherein the piston-rod-side chamber of the cylinder (20a, 21a) of one side of the at least one axle (17), which has one degree of freedom less, is connected to the bottom-side chambers of the cylinders (20b, c; 21b, c) of the other side of the at least one axle (22, 23).

9. The self-propelled harvester according to any one of claim 7 or 8, **characterized in that** the cylinders in the network of one side (20) are hydraulically connected with the bottom-side chamber to all piston-rod-side chambers on the other side (21), which are located on the at least two axles (22, 23) which are vertically movable in a translatory manner.

10. The self-propelled harvester according to any one of claims 2 - 9, **characterized in that** a hydraulic fluid in a further network (29, 30) with at least one connected piston-rod-side chamber of at least one of the cylinders of a network, (27, 28) which cylinders are hydraulically connected on the bottom side, can no longer escape from the further network.

11. The self--propelled harvester according to any one of claims 2 - 10, **characterized in that** a pressure difference can be created between at least two piston-rod-side chambers of those cylinders (20b, c; 21b, c) of a network that are hydraulically connected on the bottom side, the cylinders of which are located on at least two axles (22, 23) which are vertically movable in a translatory manner.

12. The self-propelled harvester according to any one of claims 2 - 11, **characterized in that** at least one accumulator is connected to at least one of the hydraulic networks.

13. A method for distributing a load over all axles of a vehicle side of a self-propelled harvester according to claim 1, with a left and a right side of the vehicle, with a chassis (11) or body, with least three axles (17, 22, 23) which are suited for receiving wheels (12, 13) or similar rolling devices, wherein these at least three axles or the axle suspension thereof are supported or suspended on the chassis via lifting devices (20), and at least one lifting device (20a) of each axle has a connection (27) to at least one lifting device (20b, c) of each other of the at least three axles such that the connection is suitable to distribute the load acting on the wheels of one side (13a, b, c) of the vehicle to all wheels of the same vehicle side (13a, b, c).

## Revendications

1. Moissonneuse automotrice, avec un côté gauche et un côté droit du véhicule, avec un châssis (11) ou une carrosserie, avec au moins trois essieux (17, 22, 23), lesquels sont adaptés pour recevoir des roues (12, 13) ou des dispositifs de roulement similaires, lesdits au moins trois essieux ou leur suspension d'essieu étant soutenus ou accrochés sur le châssis par l'intermédiaire de dispositifs de levage (20) et au moins un dispositif de levage (20a) de chaque essieu étant en liaison (27) avec au moins un dispositif de levage (20b, c) de chacun des au moins trois autres essieux, de telle sorte que la liaison soit apte à distribuer la charge qui agit sur les roues d'un côté (13a, b, c) du véhicule sur toutes les roues du même côté du véhicule (13a, b, c), le dispositif de levage étant un vérin hydraulique qui comporte une chambre côté sol et une chambre côté tige de piston et la liaison (27) étant conçue sous forme hydraulique et formant avec les deux vérins (20) reliés l'un à l'autre un réseau hydraulique (20 ; 27), un volume de liquide hydraulique dans le réseau étant modifiable et le volume de liquide hydraulique dans le réseau relié côté sol pouvant être réduit sur un côté (27, 28) de la quantité de laquelle il est augmenté dans le réseau (28, 27) côté sol de l'autre côté.

2. Moissonneuse automotrice selon la revendication 1, **caractérisée en ce que** l'au moins un essieu (17) dispose d'au moins un degré de liberté de moins qu'au moins l'un des deux autres essieux (22, 23).

3. Moissonneuse automotrice selon la revendication 2, **caractérisée en ce que** l'au moins un essieu (17) qui dispose d'un degré de liberté de moins ne peut réaliser aucun déplacement en translation par rapport à la partie du châssis (16) sur laquelle l'au moins un autre essieu (22, 23) est soutenu ou accroché.

4. Moissonneuse automotrice selon l'une quelconque des revendications 2 ou 3, **caractérisée en ce que** l'essieu (17) qui dispose d'un degré de liberté de moins dispose d'un logement pendulaire (18).

5. Moissonneuse automotrice selon l'une quelconque des revendications 2 à 4, **caractérisée en ce que** l'essieu qui dispose d'un degré de liberté de moins (17) est fixé sur une partie (14) du châssis (11) qui par l'intermédiaire d'une rotule ou d'une couronne de pivotement est reliée avec une autre partie (16) du châssis avec laquelle l'au moins un autre essieu (22, 23) est soutenu ou accroché.

6. Moissonneuse automotrice selon l'une quelconque des revendications 2 - 5, **caractérisée en ce que** les vérins (20, 21) et leurs points d'engagement (26) sont dimensionnés de telle sorte que la pression dans la zone de contact de toutes les roues (13) d'un côté sur le sol puisse devenir uniforme.

7. Moissonneuse automotrice selon l'une quelconque des revendications 2 - 6, **caractérisée en ce que** chaque essieu est soutenu ou accroché par un vérin gauche (20) et un droit (21) et **en ce que** les vérins sont reliés par l'intermédiaire de deux réseaux hydrauliques (27, 28) séparés par côté, tous les vérins d'un côté étant hydrauliquement reliés entre eux avec la chambre côté sol.

8. Moissonneuse automotrice selon l'une quelconque des revendications 2 - 6, **caractérisée en ce que** chaque essieu est soutenu ou accroché par un vérin gauche (20) et un droit (21) et **en ce que** les vérins sont reliés par l'intermédiaire de deux réseaux hydrauliques (27, 28) séparés, la chambre côté tige de piston du vérin (20a, 21a) d'un côté de l'au moins un essieu (17) qui dispose d'un degré de liberté de moins étant reliée avec les chambres côté sol des vérins (20b, c ; 21b, c) de l'autre côté de l'au moins un autre essieu (22, 23).

9. Moissonneuse automotrice selon l'une quelconque des revendications 7 ou 8, **caractérisée en ce que** les vérins dans le réseau sur un côté (20) avec la chambre côté sol sont hydrauliquement reliés avec toutes les chambres côté tige de piston des vérins sur l'autre côté (21), qui se trouvent sur les au moins deux essieux (22, 23) qui sont mobiles en translation verticale.

10. Moissonneuse automotrice selon l'une quelconque des revendications 2 - 9, **caractérisée en ce qu'**un liquide hydraulique dans un réseau (29, 30) supplémentaire avec au moins une chambre côté tige de piston raccordée d'au moins l'un des vérins hydrauliquement reliés côté sol d'un réseau (27, 28) ne peut plus s'échapper du réseau supplémentaire.

11. Moissonneuse automotrice selon l'une quelconque des revendications 2 - 10, **caractérisée en ce qu'**il peut être établi une pression différentielle entre au moins deux chambres côté tige de piston des vérins (20b, c ; 21b, c) hydrauliquement reliés côté sol d'un réseau dont les vérins se trouvent sur au moins deux essieux (22, 23) qui sont mobiles en translation verticale.

12. Moissonneuse automotrice selon l'une quelconque des revendications 2 - 11, **caractérisée en ce qu'**au moins un accumulateur est raccordé sur au moins l'un des réseaux hydrauliques.

13. Procédé destiné à répartir une charge sur tous les essieux d'un côté de véhicule, sur une moissonneuse automotrice selon la revendication 1, avec un côté gauche et un côté droit du véhicule, avec un châssis (11) ou une carrosserie, avec au moins trois essieux (17, 22, 23), lesquels sont adaptés pour recevoir des roues (12, 13) ou des dispositifs de roulement similaires, lesdits au moins trois essieux ou leur suspension d'essieu étant soutenus ou accrochés sur le châssis par l'intermédiaire de dispositifs de levage (20) et au moins un dispositif de levage (20a) de chaque essieu étant en liaison (27) avec au moins un dispositif de levage (20b, c) de chacun des au moins trois autres essieux, de telle sorte que la liaison soit apte à distribuer la charge qui agit sur les roues d'un côté (13a, b, c) du véhicule sur toutes les roues du même côté du véhicule (13a, b, c).
